(19) Europäisches Patentamt / European Patent Office / Office européen des brevets

(11) **EP 2 610 359 A1**

(12) **EUROPEAN PATENT APPLICATION**
published in accordance with Art. 153(4) EPC

(43) Date of publication:
**03.07.2013 Bulletin 2013/27**

(21) Application number: **11820070.8**

(22) Date of filing: **29.08.2011**

(51) Int Cl.:
*C22C 9/00* (2006.01)   *C22C 9/01* (2006.01)
*C22C 9/02* (2006.01)   *C22C 9/04* (2006.01)
*C22C 9/05* (2006.01)   *C22C 9/06* (2006.01)
*C22C 9/10* (2006.01)   *C22F 1/08* (2006.01)
*H01B 1/02* (2006.01)   *C22F 1/00* (2006.01)

(86) International application number:
**PCT/JP2011/069466**

(87) International publication number:
**WO 2012/026611 (01.03.2012 Gazette 2012/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.08.2010   JP 2010191534**

(71) Applicant: **Furukawa Electric Co., Ltd.
Chiyoda-ku
Tokyo 100-8322 (JP)**

(72) Inventors:
• **KANEKO, Hiroshi
Tokyo 100-8322 (JP)**

• **SATO, Koji
Tokyo 100-8322 (JP)**
• **ISOMATSU, Takemi
Tokyo 100-8322 (JP)**
• **EGUCHI, Tatsuhiko
Tokyo 100-8322 (JP)**

(74) Representative: **Forstmeyer, Dietmar et al
BOETERS & LIECK
Oberanger 32
80331 München (DE)**

(54) **COPPER ALLOY SHEET AND METHOD FOR PRODUCING SAME**

(57)     {Problems} To provide a copper alloy sheet material, excellent in bending property and mechanical strength, and suitable for lead frames, connectors, terminal materials, and the like in electrical/electronic equipments, for connectors, for example, to be mounted on automotive vehicles, and for terminal materials, relays, switches, and the like; and to provide a method of producing the same.

{Means to solve} A copper alloy sheet material, containing at least one of Cr, Zr, and Ti in an amount of 0.05 to 1.0 mass% in total, with the balance being copper and unavoidable impurities, wherein an area ratio of Cube orientation {0 0 1} <1 0 0> is 5% or more and 70% or less, in crystal orientation analysis by an EBSD analysis, and wherein a Vickers hardness is 120 or more; and a method of producing the same.

EP 2 610 359 A1

**Description**

TECHNICAL FIELD

The present invention relates to a copper alloy sheet material and a method of producing the same, and specially the present invention relates to a copper alloy sheet material and to a method of producing the same, which can be applied, for example, to lead frames, connectors, terminal materials, relays, switches, sockets, motors, and the like, for parts to be mounted on automotives or for electrical/electronic equipments.

BACKGROUND ART

Characteristics required for copper alloy sheet materials that are used in applications, such as lead frames, connectors, terminal materials, relays, switches, and sockets, for parts to be mounted on automotives or for electrical/ electronic equipments, include, electrical conductivity, proof stress (yield stress), tensile strength, bending property, and stress relaxation resistance. In recent years, the demanded levels for the characteristics to those parts become higher, concomitantly with the size reduction, weight reduction, enhancement of the performance, high density packaging, or the temperature rise in the use environment, of electrical/electronic equipments.

Under the circumstances of reduction of mineral resources or weight reduction of parts, thickness reduction of copper alloy materials to be used for parts (for example, sheet materials) is in progress. Further, in order to maintain the spring contact pressure, copper alloy sheet materials are used which have a higher mechanical strength than conventional cases. Since a bending property is generally in a trade-off relationship with a mechanical strength, when a high strength copper alloy sheet material is worked at the bending radius as in conventional cases, there is a case of occurrence of cracks. In particular, there are many occasions in which a design of bending the material 180° into a U-shape is needed in vehicle-mounted terminals, connectors for electronic equipment applications, and the like. In this case, since a large stress is imparted on the external side of the bent portion, cracks occur in a copper alloy sheet material poor in the bending property, causing a problem of electrical conduction due to a lowering of the contact pressure of the connector. Therefore, a plurality of notches may be made in the inner side of copper alloy sheet material to be bent 180°, or a modification of design may be carried out such as adopting a large inner bending radius. For this reason, it cannot achieve a good balance with a reduction of press costs and a size reduction of the parts for electronic equipments.

Recently, along with the progress in the downsizing of electronic parts, such as connectors, the tolerances in the size accuracy of terminals and in the press working have been becoming severe to achieve. By lowering the Young's modulus of a copper alloy sheet material, the effect of variation in size on contact pressure can be decreased, and thus the designing of parts becomes readily. Therefore, a copper alloy part is required to have a low Young's modulus (modulus of longitudinal elasticity), and there is a demand for a copper alloy sheet material with Young's modulus 120 GPa or less and deflection coefficient 105 GPa or less.

In order to improve the bending property of a copper alloy sheet material, there is some proposals based on controlling of crystal orientation. For example, Patent Literature 1 proposed, in a Cu-Ni-Si-based copper alloy, a copper alloy sheet material excellent in the bending property, which sheet material has a given grain size and a crystal orientation in which X-ray diffraction intensities from the {3 1 1}, {2 2 0}, and {2 0 0} planes satisfy a certain condition. Further, Patent Literature 2 proposed, in a Cu-Ni-Si-based copper alloy, a copper alloy sheet material excellent in the bending property, which sheet material has a crystal orientation in which the X-ray diffraction intensities from the {2 0 0} and {2 2 0} planes satisfy a certain condition. Further, Patent Literature 3 proposed, in a Cu-Ni-Si-based copper alloy, a copper alloy sheet material excellent in the bending property, which sheet material has a ratio of Cube orientation {1 0 0} <0 0 1> of 50% or more.

Further, there were made some proposals for changing the Young's modulus of copper alloys. For example, Patent Literature 4 proposed a method of layering 100 or more layers in total of copper alloy layers and iron alloy layers in an alternate superposing fashion, to change the Young's modulus. Further, there were proposals of: a method of enhancing the Young's modulus in the 45° direction to the rolling direction of a copper alloy foil containing a trace amount of silver (for example, see Patent Literature 5); and methods of lowering the Young's modulus of a copper alloy sheet material, by adding a large amount of Zn and controlling the amount of Sn (for example, see Patent Literatures 6 and 7).

CITATION LIST

PATENT LITERATURES

Patent Literature 1: JP-A-2006-009137 ("JP-A" means unexamined published Japanese patent application)

Patent Literature 2: JP-A-2008-013836
Patent Literature 3: JP-A-2006-283059
Patent Literature 4: JP-A-2005-225063
Patent Literature 5: JP-A-2009-242846
Patent Literature 6: JP-A-2001-294957
Patent Literature 7: JP-A-2003-306732

## SUMMARY OF INVENTION

### TECHNICAL PROBLEM

However, in the inventions described in Patent Literatures 1 and 2, only a limited specific planes among the expansive distribution of crystal orientations are focused, in the analysis of X-ray diffraction on specific atomic planes, such as {2 2 0} and {3 1 1}, and there are some cases that cannot be said sufficient even these orientation controlling. Further, in the invention described in Patent Literature 3, the control of the crystal orientations was attained, by decreasing the rolling working ratio after the solution heat treatment; however, in some cases, an effect to improve the bending property was insufficient by only doing so. In recent years, downsizing, enhancement of the performance, high density packaging, and the like of electrical/electronic equipments are required, and a higher bending property than the bending property as envisaged in the inventions described in Patent Literatures 1 to 3 has been demanded. It is difficult to satisfy this property, with the inventions described in these Patent Literatures.
Further, in the invention described in Patent Literature 4, the electrical conductivity is low, and this technique associates with a problem of corrosion of the iron alloy layers, a problem of insufficient homogeneity when conducting plating thereto, and the like, and thus this cannot be said to be sufficient for use in parts. Further, a terminal, such as a connector, is generally taken out as a part from the raw material in parallel or perpendicular to the rolling direction. Thus, it cannot be said practical for a method of enhancing the Young's modulus in the 45° direction to the rolling direction of a copper alloy foil, as in the invention described in Patent Literature 5. Further, in Patent Literature 6, the Young's modulus is lowered to a predetermined value or less, by providing a Cu-Zn-Sn-based alloy containing Zn in a content of 23 to 28 mass%, and the Young's modulus in the direction perpendicular to the expansion or rolled direction is set to 130 kN/mm$^2$ or less. In Patent Literature 7, the Young's modulus is set to 115 kN/mm$^2$ or less, by providing a Cu-Ni-Sn-Zn-based alloy containing Zn in a content of more than 15 mass% and not more than 35%. In the inventions described in Patent Literatures 6 and 7, since it is necessary to make a large amount of Zn into a solid solution, the electrical conductivity is lowered, and thus those techniques cannot be used in parts for electrical/electronic equipments.
In view of the problems described above, the present invention is contemplated for providing a copper alloy sheet material, which is excellent in the bending property, and has an excellent mechanical strength, and which is thus suitable for lead frames, connectors, terminal materials, and the like in electrical/electronic equipments, for connectors, for example, to be mounted on automotive vehicles, and for terminal materials, relays, switches, and the like. The present invention is also contemplated for providing a method of producing the copper alloy sheet material.

### SOLUTION TO PROBLEM

The inventors of the present invention extensively conducted investigations, and conducted a study on copper alloy sheet materials appropriate for electrical/electronic part applications. Thus, the inventors found that, in copper alloy sheet materials, there is a correlation in the bending property and the Young's modulus, with the Cube orientation accumulation ratio. The present invention was attained based on this finding.
That is, according to the present invention, there is provided the following means:

(1) A copper alloy sheet material, containing at least one of Cr, Zr, and Ti in an amount of 0.05 to 1.0 mass% in total, with the balance being copper and unavoidable impurities,
wherein an area ratio of Cube orientation {0 0 1} <1 0 0> is 5% or more and 70% or less, in crystal orientation analysis by an EBSD analysis, and
wherein a Vickers hardness is 120 or more.
(2) A copper alloy sheet material, containing at least one of Cr, Zr, and Ti in an amount of 0.05 to 1.0 mass% in total, and at least one selected from the group consisting of Sn, Zn, Si, Ag, Mn, B, P, Mg, Ni, Co, and Hf in an amount of 0.005 to 1.0 mass% in total, with the balance being copper and unavoidable impurities,
wherein an area ratio of Cube orientation {0 0 1} <1 0 0> is 5% or more and 70% or less, in crystal orientation analysis by an EBSD analysis, and
wherein a Vickers hardness is 120 or more.
(3) A copper alloy sheet material, containing at least one of Be and Ni in an amount of 0.1 to 3.0 mass% in total, with the balance being copper and unavoidable impurities,
wherein an area ratio of Cube orientation {0 0 1} <1 0 0> is 5% or more and 70% or less, in crystal orientation analysis by an EBSD analysis, and
wherein a Vickers hardness is 120 or more.

(4) A copper alloy sheet material, containing at least one of Be and Ni in an amount of 0.1 to 3.0 mass% in total, and at least one selected from the group consisting of Sn, Zn, Ag, Mn, B, P, Mg, Al, Cr, Co, Ti, Zr, and Hf in an amount of 0.005 to 1.0 mass% in total, with the balance being copper and unavoidable impurities,
wherein an area ratio of Cube orientation {0 0 1} <1 0 0> is 5% or more and 70% or less, in crystal orientation analysis by an EBSD analysis, and
wherein a Vickers hardness is 120 or more.

(5) A copper alloy sheet material, containing at least one of Ni and Sn in an amount of 0.03 to 5.0 mass% in total, and P in an amount of 0.01 to 0.3 mass%, with the balance being copper and unavoidable impurities,
wherein an area ratio of Cube orientation {0 0 1} <1 0 0> is 5% or more and 70% or less, in crystal orientation analysis by an EBSD analysis, and
wherein a Vickers hardness is 120 or more.

(6) A copper alloy sheet material, containing at least one of Ni and Sn in an amount of 0.03 to 5.0 mass% in total, P in an amount of 0.01 to 0.3 mass%, and at least one selected from the group consisting of Zn, Si, Ag, Mn, B, Mg, Cr, Co, Ti, Zr, and Hf in an amount of 0.005 to 1.0 mass% in total, with the balance being copper and unavoidable impurities,
wherein an area ratio of Cube orientation {0 0 1} <1 0 0> is 5% or more and 70% or less, in crystal orientation analysis by an EBSD analysis, and
wherein a Vickers hardness is 120 or more.

(7) A copper alloy sheet material, containing Mg and P in an amount of 0.3 to 2.0 mass% in total, with the balance being copper and unavoidable impurities,
wherein an area ratio of Cube orientation {0 0 1} <1 0 0> is 5% or more and 70% or less, in crystal orientation analysis by an EBSD analysis, and
wherein a Vickers hardness is 120 or more.

(8) A copper alloy sheet material, containing Mg and P in an amount of 0.3 to 2.0 mass% in total, and at least one selected from the group consisting of Sn, Zn, Ag, Mn, B, Ni, Co, Cr, Ti, Zr, and Hf in an amount of 0.005 to 1.0 mass% in total, with the balance being copper and unavoidable impurities,
wherein an area ratio of Cube orientation {0 0 1} <1 0 0> is 5% or more and 70% or less, in crystal orientation analysis by an EBSD analysis, and
wherein a Vickers hardness is 120 or more.

(9) The copper alloy sheet material described in any one of items (1) to (8), wherein the total of area ratios of Copper orientation {1 2 1} <1 1 1> and Brass orientation {1 1 0} <1 1 2> is 20% or less.
(10) The copper alloy sheet material described in any one of items (1) to (9), wherein second phase particles with a size of 30 to 1,000 nm are present at $10^4$ to $10^8$ per $mm^2$.
(11) A method of producing the copper alloy sheet material described in any one of items (1) to (10), comprising: subjecting a copper alloy raw material having an alloy composition to give the copper alloy sheet material, to the steps of:

casting [Step 1]; homogenization heat treatment [Step 2]; hot-working [Step 3]; water-cooling [Step 4]; cold-rolling 1 [Step 6]; heat treatment 1 [Step 7]; cold-rolling 2 [Step 8]; and heat treatment 2 [Step 9], in this order.

(12) The method of producing the copper alloy sheet material described in item (11), wherein aging precipitation heat treatment [Step 11]; cold-rolling [Step 12]; and temper annealing [Step 13] are conducted in this order, after the heat treatment 2 [Step 9].
(13) A copper alloy part, comprising the copper alloy sheet material described in any one of items (1) to (10).
(14) A connector, comprising the copper alloy sheet material described in any one of items (1) to (10).

ADVANTAGEOUS EFFECTS OF INVENTION

According to the present invention, a copper alloy sheet material can be provided, which is excellent in the bending property, which has an excellent mechanical strength, and which is thus suitable for lead frames, connectors, terminal materials, and the like in electrical/electronic equipments, for connectors, for example, to be mounted on automotive vehicles, and for terminal materials, relays, switches, and the like. Further, according to the present invention, a copper alloy part using the copper alloy sheet material can be provided.

Further, the method of the present invention of producing the copper alloy sheet material, is favorable as a method of producing the copper alloy sheet material, which is excellent in the bending property, which has an excellent mechanical strength, and which is thus suitable for lead frames, connectors, terminal materials, and the like in electrical/electronic equipments, for connectors, for example, to be mounted on automotive vehicles, and for terminal materials, relays, switches, and the like.

Other and further features and advantages of the invention will appear more fully from the following description, appropriately referring to the accompanying drawings.

BRIEF DESCRIPTION OF THE DRAWINGS

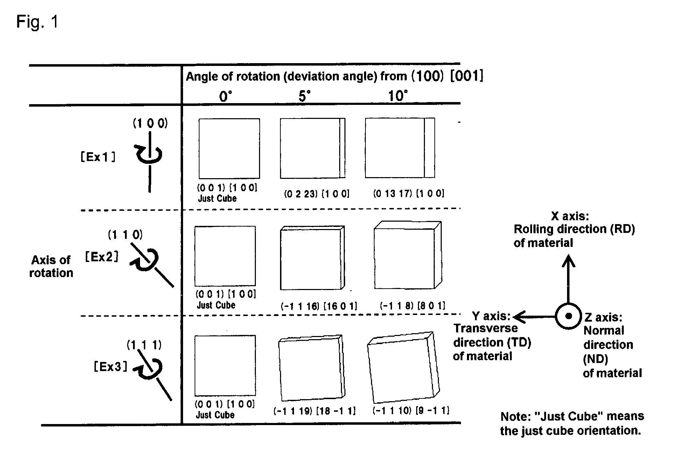

{Fig. 1}
Fig. 1 is a schematic view showing examples in which the declination angle (deviation angle) from Cube orientation {0 0 1} <1 0 0> is within 10°.
{Fig. 2}
Fig. 2 is an orientation density distribution function map for Example 1, in which $\varphi 2$ is from 0° to 90° at intervals of 5°, $\varphi 1$ is a horizontal axis, and $\Phi$ is a longitudinal axis.
{Fig. 3}
Fig. 3 is an orientation density distribution function map for Comparative Example 1, in which $\varphi 2$ is from 0° to 90° at intervals of 5°, $\varphi 1$ is a horizontal axis, and $\Phi$ is a longitudinal axis.
{Fig. 4}
Figs. 4(a) and 4(b) are explanatory diagrams for the method of testing the stress relaxation resistance, in which Fig. 4(a) shows the state before heat treatment, and Fig. 4(b) shows the state after the heat treatment.

MODE FOR CARRYING OUT THE INVENTION

In order to develop a copper alloy sheet material excellent in the bending property, the inventors of the present invention conducted detailed investigation and analysis on the cause of occurrence of cracks upon bending of a copper alloy sheet material. As a result, the inventors found that the cause is that, upon the bending of the copper alloy sheet material, copper plastic deformation locally develops to form a shear deformation zone, to cause occurrence and connection of microvoids via local work-hardening, resulting in reaching the growth limitation. Then, the inventors, having intensively studied, found that a copper alloy sheet material excellent in the bending property can be obtained, by increasing the ratio of a crystal orientation in which microscopic strain is difficult to be accumulated upon bending deformation. The present invention was made based on those findings.

Preferable embodiments of the copper alloy sheet material of the present invention will be described in detail. Herein, the term "copper alloy material" means a product obtained after a copper alloy base material (before working, having a predetermined alloy composition) is worked into a predetermined shape (for example, sheet, strip, foil, rod, or wire). Among them, a sheet material refers to a material which has a specific thickness, is stable in the shape, and is extended in the plane direction, and in a broad sense, the sheet material is meant to encompass a strip material. In the present invention, there are no particular limitations on the thickness of the sheet material, but when it is considered that the thickness should well exhibit the effects of the present invention and should be suitable for practical applications, the thickness is preferably 4 to 0.03 mm, and more preferably 1 to 0.05 mm.

In the copper alloy sheet material of the present invention, the characteristics are defined by the accumulation ratio of the atomic plane in a predetermined direction of a rolled sheet, but this will be considered enough if the copper alloy sheet material has such characteristics. The shape of the copper alloy sheet material is not intended to be limited to a sheet material or a strip material. It is noted that, in the present invention, a tube material can also be construed and treated as a sheet material.

(1) Area ratio in crystal orientation analysis

The copper alloy sheet material of the present invention has an area ratio of Cube orientation {0 0 1} <1 0 0> of 5% or more and 70% or less, according to a crystal orientation analysis in EBSD measurement.

The method of indicating the crystal orientation in the present specification, is such that a Cartesian coordinate system is employed, representing the longitudinal direction (LD) of the copper alloy sheet material {which equals to the rolling direction (RD) of the sheet material} in the X-axis, the transverse direction (TD) in the Y-axis, and the thickness direction of the sheet material {which equals to the direction (ND) normal to the rolling direction of the sheet material} in the Z-axis, various regions in the copper alloy sheet material are indicated in the form of (h k l) [u v w], using the index (h k l) of the crystal plane that is perpendicular to the Z-axis (parallel to the rolled plane (XY plane)) and the index [u v w] of the crystal direction that is perpendicular to the X-axis (parallel to YZ plane). Further, the orientation that is equivalent based on the symmetry of the cubic crystal of a copper alloy is indicated as {h k l} <u v w>, using parenthesis symbols representing families, such as in (1 3 2) [6 -4 3], and (2 3 1) [3 -4 6].

The analysis of the crystal orientation in the present invention is conducted using the EBSD method. The EBSD method, which stands for Electron Backscatter Diffraction, is a technique of crystal orientation analysis using reflected electron Kikuchi-line diffraction (Kikuchi pattern) that occurs when a copper alloy sheet material is irradiated with an electron beam under a scanning electron microscope (SEM). In the present invention, a sample area, which is measured 500 $\mu$m on each of the four sides and which contains 200 or more grains, is subjected to an analysis of the orientation, by scanning in a stepwise manner at an interval of 0.5 $\mu$m.

The area ratio of the respective orientation is a value calculated by dividing the area of a region in which the deviation angle from the respective ideal orientation is 10° or less, by the measured area.

In regard to the deviation angle from the ideal orientation, an angle of rotation around the axis of common rotation is calculated, and the angle of rotation is designated as the deviation angle. Fig. 1 presents examples of the orientations in which the deviation angle from the Cube orientation is 10° or less. This diagram shows orientations in which the deviation angle is within 10° on the axes of rotation of the planes (1 0 0), (1 1 0), and (1 1 1), but the angle of rotation relative to the Cube orientation can be calculated with respect to any axis of rotation. As for the axis of rotation, one that can be represented by the smallest deviation angle is employed. This deviation angle is calculated for all measurement points, and the sum of the area of grains having an orientation within 10° from the respective orientation is divided by the total measured area, and the resultant value is designated as the ratio of the area (i.e. the area ratio).

The data obtained from the orientation analysis based on EBSD includes the orientation data to a depth of several tens nanometers, through which the electron beam penetrates into the sample. However, since the depth is sufficiently small as compared with the width to be measured, the data is described in terms of ratio of an area, i.e. area ratio, in the present specification. The orientation distribution is measured from the sheet material surface of the copper alloy sheet material, and in the case where the orientation distribution chages in the sheet thickness direction, the orientation analysis by EBSD refers to a value that is obtained, by taking arbitrary several points in the sheet thickness direction, and obtaining the average thereof.

The copper alloy sheet material of the present invention has an area ratio of Cube orientation {0 0 1} <1 0 0> of 5% or more and 70% or less, according to a crystal orientation analysis in the EBSD measurement. The copper alloy sheet material having an area ratio of Cube orientation {0 0 1} <1 0 0> within this range, is excellent in bending property. When the area ratio of Cube orientation {0 0 1} <1 0 0> is too low, the bending property is worsened. When the area ratio of Cube orientation {0 0 1} <1 0 0> is too high, the mechanical strength of the copper alloy sheet material may be lowered, which is not preferable. Further, under the state in which the area ratio of Cube orientation is as high as more than 70%, the grains having Cube orientation are in the state that the grains each has a large grain size and are coarsened, and the bending property may rather be deteriorated due to grain boundary cracks and the like. The range of the area ratio of Cube orientation is preferably 7 to 48%, more preferably 10 to 35%.

In addition to Cube orientation in the above-mentioned range, when the total of the area ratio of Copper orientation {1 2 1} <1 1 1> and the area ratio of Brass orientation {1 1 0} <1 1 2> is 20% or less, the bending property is further improved. When this total area ratio is over 20%, the bending property may become poor. This total area ratio is preferably 15% or less, more preferably 10% or less.

Although RDW orientation {1 2 0} <0 0 1>, S orientation {2 3 1} <3 4 6>, D orientation {4 11 4} <11 8 11>, Goss orientation {1 1 0} <0 0 1>, R1 orientation {3 5 2} <3 5 8>, BR orientation {3 6 2} <8 5 3>, and the like are generated as other crystal orientations, these orientation components may be present in the copper alloy sheet material of the present invention, as long as the above-mentioned Cube orientation is satisfied, further preferably, as long as the above-mentioned total area ratio of Copper orientation and Brass orientation is satisfied.

Herein, the features of the EBSD analysis will be explained in comparison with the X-ray diffraction analysis. Firstly, an X-ray diffractometry can measure only five kinds of planes: i.e. ND//(1 1 1), (2 0 0), (2 2 0), (3 1 1), and (4 2 0) planes, each of which satisfies the Bragg's diffraction conditions and can provide a sufficient diffraction intensity. However, the X-ray diffractometry cannot measure any crystal orientations that are expressed by a high index, such as ND//(511) plane and ND//(951) plane, which correspond to an angle formed with (i.e. the deviation angle or a misorientation angle from) the Cube orientation from 15 to 30°. Namely, utilizing the EBSD analysis, information relating to those crystal orientations expressed by a high index can be obtained, for the first time, which makes it to possible to clarify the relationships between the metal microstructure specified by this way and the action thereof.

Secondly, the X-ray diffraction measures the content of a crystal orientation included in about ±0.5° of ND//{hkl}. On the other hand, since a Kikuchi pattern is utilized in the EBSD analysis, incomparably broader information on metal microstructures can be cyclopedically obtained with the EBSD analysis, which is not limited to specific crystal planes, to clarify a state of the whole alloy material, which state is difficult to specify with the X-ray diffraction.

As explained above, the information obtainable via the EBSD analysis and the information obtainable via the X-ray diffraction analysis differ from each other in the points of the contents and the natures.

Unless otherwise specified, in the present specification, the results of EBSD analysis are results obtained in connection with the ND direction of a copper alloy sheet material.

(2) Vickers hardness

The copper alloy sheet material of the present invention has a Vickers hardness of 120 or more, preferably 190 or more. Although there is no particular limitation on the upper limit value of the Vickers hardness of this sheet material, the upper limit is generally 400 or less. The Vickers hardness in the present specification refers to a value measured according to JIS Z 2244. The copper alloy sheet material having a Vickers hardness within this range exhibits such an effect that the copper alloy sheet material of the present invention gives a sufficient contact pressure at an electrical contact point when used in a connector or the like. When the Vickers hardness is too small, the contact pressure on the electrical contact point of the connector becomes insufficient, and thus electrical continuity failure may be caused.

The copper alloy sheet material of the present invention preferably has any of the following compositions.

### (3)        Cu-(Cr, Zr, Ti)-based alloy

The copper alloy sheet material of the present invention contains at least one of Cr, Zr, and Ti in total in an amount of 0.05 to 1.0 mass%, and optionally at least one selected from the group consisting of Sn, Zn, Si, Ag, Mn, B, P, Mg, Ni, Co, and Hf in total in an amount of 0.005 to 1.0 mass%, with the balance being copper and unavoidable impurities. Therefore, it is not necessary to add any of the elements of the group consisting of Sn, Zn, Si, Ag, Mn, B, P, Mg, Ni, Co, and Hf. By setting the content of Cr, Zr, and Ti to be within the above-mentioned range, it is possible to precipitate: (6-1) a metal, such as Cr alone, Zr alone, and Ti alone; (6-2) a compound of at least two of Cr, Zr, and Ti; and (6-3) a compound of copper and at least one element of Cr, Zr, and Ti, thereby to enhance the mechanical strength and improve the stress relaxation resistance of the resultant copper alloy. The contant of Cr, Zr, and Ti, in terms of at least one of Cr, Zr, and Ti in total, is 0.05 to 1.0 mass%, prefereably 0.35 to 0.7 mass%. The respective addition amount of Cr, Zr, and Ti is preferably 0.1 to 0.45 mass%, more preferably 0.2 to 0.4 mass%.

When the total addition amount of these elements is too larger than the above-mentioned range, the electrical conductivity is lowered, whereas when the total addition amount is too small, the effects cannot be sufficiently obtained.

(4) Cu-(Be, Ni)-based alloy

The copper alloy sheet material of the present invention contains at least one of Be and Ni in total in an amount of 0.1 to 3.0 mass%, and optionally at least one selected from the group consisting of Sn, Zn, Ag, Mn, B, P, Mg, Al, Cr, Co, Ti, Zr, and Hf in total in an amount of 0.005 to 1.0 mass%. Therefore, it is not necessary to add any of the elements of the group consisting of Sn, Zn, Ag, Mn, B, P, Mg, Al, Cr, Co, Ti, Zr, and Hf. By setting the content of Be and Ni to be within the above-mentioned range, it is possible to precipitate Be and/or a Be-Ni compound, thereby to enhance the mechanical strength and improve the stress relaxation resistance of the resultant copper alloy. The contant of Be and Ni, in terms of at least one of Be and Ni in total, is 0.1 to 3.0 mass%, preferably 2.0 to 3.0 mass%. The addition amount of Be is preferably 0.1 to 2.8 mass%, more preferably 0.2 to 2.5 mass%. The addition amount of Ni is preferably 0.1 to 2.5 mass%, more preferably 0.2 to 2.0 mass%. When the total addition amount of these elements is too larger than the above-mentioned range, the electrical conductivity is lowered, whereas when the total addition amount is too small, the effects cannot be sufficiently obtained.

(5) Cu-(Ni, Sn)-P-based alloy

The copper alloy sheet material of the present invention contains at least one of Ni and Sn in total in an amount of 0.03 to 5.0 mass%, P in an amount of 0.01 to 0.3 mass%, and optionally at least one selected from the group consisting of Zn, Si Ag, Mn, B, Mg, Cr, Co, Ti, Zr, and Hf in total in an amount of 0.005 to 1.0 mass%. Therefore, it is not necessary to add any of the elements of the group consisting of Zn, Si Ag, Mn, B, Mg, Cr, Co, Ti, Zr, and Hf. By setting the content of Ni, Sn, and P to be within the above-mentioned ranges, it is possible to precipitate a compound of an element(s) of Ni or/and P, thereby to enhance the mechanical strength and improve the stress relaxation resistance of the resultant copper alloy. By containing Sn with Ni and/or P, a synergistic effect can be exhibited, for improving the stress relaxation resistance. The content of at least one of Ni and Sn in total is 0.03 to 5.0 mass%, preferably 1.0 to 4.0 mass%, more preferably 2.0 to 3.0 mass%. The content of Ni is preferably 0.03 to 3.0 mass%, more preferably 0.5 to 2.0 mass%. The content of Sn is preferably 0.2 to 1 mass%, more preferably 0.25 to 0.5 mass%. Further, the content of P is preferably 0.01 to 0.3 mass%, more preferably 0.02 to 0.08 mass%.

When the total addition amounts of these elements are too larger than the above-mentioned ranges, the electrical conductivity is lowered, whereas when the total addition amounts are too small, the effects cannot be sufficiently obtained. When these elements are added too much over the above ranges, Cube orientation may be decreased in some cases, which is not preferable.

(6) Cu-Mg-P-based alloy

The copper alloy sheet material of the present invention contains Mg and P in total in an amount of 0.3 to 2.0 mass%, and optionally at least one selected from the group consisting of Sn, Zn, Ag, Mn, B, Ni, Co, Cr, Ti, Zr, and Hf in total in an amount of 0.005 to 1.0 mass%, with the balance being copper and unavoidable impurities. Therefore, it is not necessary to add any of the elements of the group consisting of Sn, Zn, Ag, Mn, B, Ni, Co, Cr, Ti, Zr, and Hf. By setting the content of Mg and P to be within the above-mentioned range, it is possible to precipitate a compound of Mg and P, thereby to enhance the mechanical strength and improve the stress relaxation resistance of the resultant copper alloy. The content of Mg and P in total is 0.3 to 2.0 mass%, preferably 1.5 to 2.0 mass%. The addition amount of each of Mg and P is preferably 0.3 to 1.0 mass%, more preferably 0.35 to 0.5 mass%. When the total addition amount of these elements is too larger than the above-mentioned range, the electrical conductivity is lowered, whereas when the total addition amount is too small, the effects cannot be sufficiently obtained. When these elements are added too much over the above range, Cube orientation may be decreased in some cases, which is not preferable.

(7) Additional alloying elements

The above alloys (3) to (6) may contain any of the following additional alloying elements. Examples of the preferable additional alloying elements include Sn, Zn, Si, Ag, Mn, B, P, Mg, Al, Ni, Cr, Co, Ti, Zr, and Hf. When any of these elements is contained as any of the above-mentioned main alloying elements, such a case is excluded from the additional alloying elements.

The content of these additional alloying elements, in terms of at least one selected from the group consisting of Sn, Zn, Si, Ag, Mn, B, P, Mg, Al, Ni, Cr, Co, Ti, Zr, and Hf in total, is 0.005 to 1.0 mass%, preferably 0.01 to 0.9 mass%, and more preferably 0.03 to 0.8 mass%. By setting the content of these additional alloying elements to be within this range, the effects can be sufficiently exhibited, and the electrical conductivity is not lowered.

When any of these additional alloying elements is(are) added too much over the above range, Cube orientation may be decreased in some cases, which is not preferable.

Among the additional alloying elements, Mg, Sn, and Zn can improve the stress relaxation resistance, and can remarkably improve solder embrittlement. When any of Mn, Ag, B, and P is added, the hot-workability can be improved, and the mechanical strength can also be enhanced. Since Cr, Ti, Zr, Hf, and Co each have an effect to suppress the growth of grains to thereby make the resultant grain size fine, to make it possible to obtain a copper alloy sheet material excellent in bending property and mechanical strength.

Meanwhile, Fe sometimes remains in the form of a coarse second phase that is not made into any solid solution in copper, in a size of several hundred micrometers to several millimeters, when the temperature of a molten metal in melting and casting is insufficient, or when the grain size of Fe in a Fe raw material to be added is too large. In the cold-rolling 1 at a working ratio of 70 to 99.9% [Step 6] in the present invention, strain may accumulate highly on the peripheries of the coarse particles of Fe in some cases, which is a cause to induce generation of nuclei for uneven recrystallization. In this case, desired Cube orientation cannot be obtained, due to, for example, randomization of the crystal orientations, which is not preferable. Further, in this case, the electrical conductivity is lowered, which is not preferable. From these reasons, in the present invention, it is preferable not to add Fe as the additional alloying element.

(8) Other preferable features

The second phase having a size of 30 to 1,000 nm contained in the respective alloy sheet material, can suppress coarsening of the grains, to thereby improve the bending property and enhance the mechanical strength. The second phase in the alloy sheet material includes a crystallized product formed in the casting step, and a precipitate formed by the hot-rolling and heat treatment. The range of the size of the second phase is more preferably 40 to 600 nm, further preferably 50 to 200 nm.

It is preferable that the second phase having a size of 30 to 1,000 nm contained in the respective alloy sheet material, is present at a density of $10^4$ to $10^8$ per $mm^2$, more preferably $5 \times 10^5$ to $5 \times 10^7$ per $mm^2$, further preferably $10^5$ to $10^7$ per $mm^2$.

When the second phase has a size of smaller than 30 nm, the effect to improve the bending property cannot be sufficiently obtained; and when the size is more than 1,000 nm, the plating property may be lowered in some cases, each of which is not preferable. When the density is too small, the effect to improve the bending property cannot be sufficiently obtained; and when too high, the bending property may be lowered in some cases, each of which is not preferable.

The average grain size of the copper alloy sheet material of the present invention is preferably 80 μm or less, more preferably 60 μm or less, and further preferably 40 μm or less. When the average grain size is too large, the mechanical strength is lowered, and wrinkles at the bent part become large, which is not preferable. Although the lower limit of the average grain size is not particularly limited, it is generally 2 μm or more.

The copper alloy sheet material of the present invention can satisfy the following properties that are required, for example, for a copper alloy sheet material for a connector. Specifically, the copper alloy sheet material has such the excellent properties of: a 0.2% proof stress of 400 MPa or more; a Vickers hardness of 120 or more; the bending property, as a value which is obtained, by dividing a minimum bending radius at which bending is possible without causing cracks in a 90° W-bending test, with the sheet thickness, of 1 or less; a Young's modulus of 120 GPa or less; a deflection coefficient of 105 GPa or less; an electrical conductivity of 25%IACS or more; and the stress relaxation resistance in terms of a stress relaxation ratio of 30% or less.

It is preferable that the copper alloy sheet material of the present invention has: a 0.2% proof stress of 600 MPa or more; a Vickers hardness of 190 or more; the bending property that enables 180°-tight U-bending; a Young's modulus of 115 GPa or less; a deflection coefficient of 100 GPa or less, an electrical conductivity of 40%IACS or more; and the stress relaxation resistance in terms of a stress relaxation ratio of 25% or less.

Herein, a deflection factor may be used as an alternative property of the Young's modulus. The deflection factor is measured in a cantilever manner, according to the Technical Standard JCBA T312:2002, "Measuring Method for Factor of Bending Deflection by Cantilever for Copper and Copper Alloy Sheets, Plates and Strips", stipulated by the Japan Copper and Brass Association.

Further, the stress relaxation resistance is represented by a value of a stress relaxation ratio (SR) as determined by the measurement method of maintaining at 150°C for 1,000 hours as will be described below.

Since the preferable values of the electrical conductivity and proof stress in the copper alloy sheet material of the present invention differ in the respective alloy system, the values are shown below for each alloy system.

In the Cu-(Cr, Zr, Ti)-based alloy, the electrical conductivity is preferably 60%IACS or more, more preferably 70%IACS or more, further preferably 75%IACS or more, particularly preferably 80%IACS or more, and the proof stress is preferably 430 MPa or more, more preferably 470 MPa or more, further preferably 500 MPa or more, particularly preferably 530 MPa or more. Although the respective upper limits of the electrical conductivity and proof stress are not particularly limited, the upper limit of the electrical conductivity is generally 98%IACS or less, and the upper limit of the proof stress is generally 800 MPa or less.

In the Cu-(Be, Ni)-based alloy, the electrical conductivity is preferably 20%IACS or more, more preferably 25%IACS or more, further preferably 40%IACS or more, particularly preferably 46%IACS or more, and the proof stress is preferably 700 MPa or more, more preferably 750 MPa or more, further preferably 850 MPa or more, particularly preferably 950 MPa or more. Although the respective upper limits of the electrical conductivity and proof stress are not particularly limited, the upper limit of the electrical conductivity is generally 80%IACS or less, and the upper limit of the proof stress is generally 1,300 MPa or less.

In the Cu-(Ni, Sn)-P-based alloy, the electrical conductivity is preferably 30%IACS or more, more preferably 34%IACS or more, further preferably 37%IACS or more, particularly preferably 41 %IACS or more, and the proof stress is preferably 500 MPa or more, more preferably 530 MPa or more, further preferably 560 MPa or more, particularly preferably 585 MPa or more. Although the respective upper limits of the electrical conductivity and proof stress are not particularly limited, the upper limit of the electrical conductivity is generally 80%IACS or less, and the upper limit of the proof stress is generally 800 MPa or less.

In the Cu-Mg-P-based alloy, the electrical conductivity is preferably 50%IACS or more, more preferably 54%IACS or more, further preferably 57%IACS or more, particularly preferably 60%IACS or more, and the proof stress is preferably 450 MPa or more, more preferably 490 MPa or more, further preferably 520 MPa or more, particularly preferably 550 MPa or more. Although the respective upper limits of the electrical conductivity and proof stress are not particularly limited, the upper limit of the electrical conductivity is generally 90%IACS or less, and the upper limit of the proof stress is generally 900 MPa or less.

(9) Method of producing a copper alloy sheet material

(Conventional method of producing a copper alloy sheet material)

Before explaining a preferable method of producing the copper alloy sheet material of the present invention, a conventional method of producing a precipitation-type copper alloy sheet material will be explained. A copper alloy raw material is casted [Step 1] to give an ingot, the resultant ingot is subjected to a homogenization heat treatment [Step 2], followed by hot-working, such as hot-rolling [Step 3], water-cooling [Step 4], face milling [Step 5], and cold-rolling 1 [Step 6], which steps are conducted in this order, to give a thin sheet. Then, the resultant thin sheet is subjected to: a heat treatment 2 [Step 9] for solution and recrystallization at a temperature range of 700 to 1,020°C in the case of a precipitation-type alloy, or alternatively for recrystallization at a temperature range of 300 to 900°C in the case of a solid-solution-type alloy; which may be followed by conducting: an aging precipitation heat treatment [Step 11] in the case of the precipitation-type alloy; and finish-cold-rolling [Step 12], so that a necessary mechanical strength would be satisfied.

In these series of steps, the most part of the texture in the copper alloy sheet material is determined by the final recrystallization heat treatment in [Step 9], and is finally determined by the rotation of the orientations, which occurs upon the finish-cold-rolling [Step 12]. Since Cube orientation is unstable in rolling, the region of Cube orientation formed in the Step 9 does not drastically increase in the Step 12.

In the case of a pure copper-based alloy containing small amounts of additive elements, when the working ratio in the cold-rolling 1 [Step 6] is as high as, for example, 90% or more, Cube orientation develops in the heat treatment 2 [Step 9], but no sheet material having a Vickers hardness of 120 or more cannot be obtained. On the other hand, in the case of a high strength alloy, such as one for use in a connector, a sheet material having a Vickers hardness of 120 or more can be obtained, but the amounts of solute elements are much and the migration degree of the grain boundary is low, and thus Cube orientation does not develop in the production step of the recrystallization in [Step 9] after the working in [Step 6].

(Preferable method of producing the copper alloy sheet material of the present invention)

In the copper alloy sheet material of the present invention, the area ratio of Cube orientation can be increased in the recrystallized texture in the intermediate heat treatment 2 [Step 9], by conducting the heat treatment 1 at 200°C to 750°C in the range of 5 seconds to 20 hours [Step 7], and the cold-rolling 2 at a working ratio of 2 to 50% [Step 8], after the cold-rolling 1 [Step 6] but before the heat treatment 2 [Step 9] in the conventional method. In the heat treatment 1 [Step 7], the copper alloy sheet material of the present invention is not completely recrystallized, and this step is to provide a sub-annealed microstructure that is partially recrystallized in this step. In the cold-rolling 2 [Step 8], uneven strain can be microscopically introduced by rolling at a low working ratio. Conducting the heat treatment 1 [Step 7] and cold-rolling 2 [Step 8] enables the preferential growth of the grains in Cube orientation in the intermediate heat treatment 2 [Step 9].

Conventionally, an intermediate annealing, such as the intermediate heat treatment 2 [Step 9], has been conducted so as to recrystallize a copper alloy sheet material to lower its mechanical strength, to thereby lower the load in the rolling in the subsequent step. Further, in the conventional production of a pure copper-based alloy sheet material, Cube orientation is enhanced, by increasing the working ratio in the rolling prior to the final recrystallization heat treatment [Step 9]. Contrary to the above, in order to obtain the copper alloy sheet material of the present invention, the area ratio of Cube orientation can be increased in the recrystallized texture in the intermediate heat treatment 2 [Step 9], by conducting the heat treatment 1 [Step 7] and the cold-rolling 2 at a working ratio of 2 to 50% [Step 8], before the heat treatment 2 [Step 9].

The conditions for the heat treatment 1 [Step 7] that is conducted for obtaining the copper alloy sheet material of the present invention, are at 200 to 750°C for 5 seconds to 20 hours, preferably at 250 to 700°C for 5 minutes to 20 hours, more preferably at 300 to 600°C for 1 to 15 hours. When the temperature is lower or the time period is shorter than the range, the recrystallization degree becomes insufficient, whereas when the temperature is higher or the time period is longer than the range, recrystallization excessively proceeds to make the grains coarsened, and the development of Cube orientation in the heat treatment 2 [Step 9] becomes insufficient, which is not preferable. Specifically, the treatment temperature in the heat treatment 1 [Step 7] is a temperature lower than the treatment temperature in the intermediate heat treatment 2 [Step 9].

The working ratio in the cold-rolling [Step 8] is 2 to 50%, preferably 4 to 40%, more preferably 5 to 30%. When the working ratio is too small, strain that acts as a driving force for recrystallization becomes insufficient. When the working ratio is too high, the strain becomes too large, and thus the development of Cube orientation in the heat treatment 2 [Step 9] becomes insufficient, which is not preferable. At least a part of the cold-rolling [Step 8] may be replaced with a method of imparting a bending strain to the copper alloy sheet material with a tension leveler or the like.

In order to obtain a copper alloy sheet material having a desired spring property, the copper alloy sheet material can be subjected to work-hardening in the finish-cold-rolling [Step 12]. The working ratio in this step is preferably 40% or less. When the working ratio is too high, the orientation changes from the Cube orientation to a rolling-stable orientation and the area of the Cube orientation is decreased, which is not preferable. Further, in order to adjust the total of the area ratios of Brass orientation and Copper orientation to 20% or less, it is preferable to set the working ratio to 25% or less.

Preferably, the copper alloy sheet material obtained by the above-mentioned production method has a microstructure with a developed Cube orientation, and is excellent in not only the bending property but also the stress relaxation resistance.

The working ratio in the respective rolling step (this is also referred to as a rolling reduction ratio or cross-section reduction ratio. The rolling ratio mentioned in the following Comparative Examples has the same meaning.), refers to a value calculated as in the following formula, by using the sheet thickness $t_1$ before the rolling step and the sheet thickness $t_2$ after the rolling step.

$$\text{Working ratio (\%)} = \{(t_1 - t_2)/t_1\} \times 100$$

After the respective heat treatment or rolling, a pickling or surface-polishing may be conducted depending on the state of the oxidation or coarseness of the surface of the sheet material, or a correction by a tension leveler may be conducted depending on the shape, it is no problem as long as the area ratio of Cube orientation {0 0 1} <1 0 0> is within the range according to the present invention.

In the case of a precipitation-type alloy, a cold-rolling [Step 10] may be conducted between the heat treatment 2 for solution [Step 9] and the aging precipitation heat treatment [Step 11]. This is because this cold-rolling [Step 10] has an effect to increase the precipitation density in the aging to thereby enhance the mechanical strength. A temper annealing [Step 13] may be conducted after the finish-cold-rolling [Step 12]. This is because, by this restoration heat treatment, the spring property is improved and the residual stress is removed, to thereby stabilize the size accuracy after pressing.

Examples of a preferable method of producing the copper alloy sheet material of the present invention include a method, which comprises: in this order, melting a copper alloy raw material composed of the above-mentioned predetermined alloying element composition in a high-frequency melting furnace, followed by casting the resultant molten metal [Step 1]; homogenization heat treatment [Step 2]; hot-working (for example, hot-rolling) [Step 3]; water-cooling (for example, water-quenching) [Step 4]; face milling [Step 5] (this face milling may be omitted); cold-rolling 1 [Step 6]; heat treatment 1 [Step 7]; cold-rolling 2 [Step 8]; and heat treatment 2 [Step 9]. After this heat treatment 2 [Step 9], the method may further comprises, if necessary, cold-rolling [Step 10] (this cold-rolling after the heat treatment 2 may be omitted), aging precipitation heat treatment [Step 11], cold-rolling [Step 12], and temper annealing [Step 13], in this order.

Preferable conditions for those steps are as follows. The cooling speed in the casting [Step 1] is 0.1 to 100°C/sec. In the homogenization heat treatment [Step 2], retention is conducted at 900 to 1,020°C for 3 minutes to 10 hours. In the water-cooling [Step 4] after the hot-working [Step 3], water quenching is conducted. The working ratio in the intermediate cold-rolling 1 [Step 6] is 70 to 99.9%. In the intermediate annealing heat treatment 1 [Step 7], retention is conducted at 200°C to 750°C for 5 seconds to 20 hours, more preferably at 250°C to 700°C for 5 minutes to 20 hours, further preferably at 300°C to 600°C for 1 to 15 hours. The working ratio in the intermediate cold-rolling 2 [Step 8] is 2 to 50%, more preferably 4 to 40%, further preferably 5 to 30%. The conditions for the final solution-recrystallization heat treatment 2 [Step 9] are at 400 to 1,000°C for 5 seconds to 10 minutes. The working ratio in the cold-rolling [Step 10] is 0 to 60%. The conditions for the aging precipitation heat treatment [Step 11] are at 400 to 700°C for 5 minutes to 10 hours. The working ratio in the finish-cold-rolling [Step 12] is 0 to 40%, more preferably 0 to 25% or 25 to 40%. Herein, a working ratio of "0%" means that no rolling is conducted. That is, it is not necessary to conduct the cold-rolling [Step 10] and the finish-cold-rolling [Step 12]. In the case where the finish-cold-rolling [Step 12] is not conducted, the cold-rolling 2 [Step 8] (or the cold-rolling [Step 10] when conducted) becomes the final cold-rolling step. In the temper annealing [Step 13], retention is conducted at 200 to 600°C for 5 seconds to 10 hours.

Scalping (face milling) for scale on the surface of the material, and dissolution by pickling or the like may be introduced as necessary. In the case where the shape after the rolling is not fine, correction by a tension leveler or the like may be introduced as necessary.

It is preferable that the copper alloy sheet material of the present invention is produced by any of the production methods of the above-mentioned embodiments, but the present invention is not necessarily constrained by conducting all of the above-mentioned [Step 1] to [Step 13] in this order, as long as the predetermined area ratio is satisfied in the crystal orientation analysis in the EBSD analysis and the predetermined Vickers hardness is satisfied. Although it is encompassed in the above-mentioned method, the production process may be finished, by conducting, for example, the [Step 9] as the final step in the [Step 1] to [Step 9], with omitting the [Step 5].

EXAMPLES

The present invention will be described in more detail based on examples given below, but the invention is not meant to be limited by these.

(Examples, and Comparative Examples)

The respective raw material was melted in a high-frequency melting furnace, followed by casting [Step 1] at a cooling speed of 0.1 to 100°C/sec, to obtain an ingot. Tables 1 to 4 show the analysed components, with the balance being copper and unavoidable impurities. The resultant ingot was subjected to homogenization heat treatment [Step 2] at 900 to 1,020°C for 3 minutes to 10 hours, followed by subjecting to hot-working [Step 3], quenching in water (corresponds to water-cooling [Step 4]), and then face milling [Step 5] to remove oxide scale. Then, the resultant sheet was subjected to cold-rolling 1 [Step 6], heat treatment 1 [Step 7], cold-rolling 2 [Step 8], and heat treatment 2 [Step 9], under the conditions as shown in terms of A to D in Table 5. Then, the resultant sheet was subjected to aging precipitation heat treatment [Step 11] at 400°C to 700°C for 5 minutes to 10 hours, finish-cold-rolling [Step 12] at a working ratio of 0% to 40%, and temper annealing [Step 13] at 200°C to 600°C for 5 seconds to 10 hours, to give sample specimens of Examples, respectively. After the respective heat treatment or rolling, by suitably conducting pickling and/or surface-polishing depending on the state of oxidation or roughness of the surface of the sheet material, and correction by a tension leveler depending on the shape, a foil with thickness about 10 $\mu$m, a thin sheet with thickness about 100 $\mu$m, and a thick sheet with thickness about 1,000 $\mu$m, as another saple specimens, were able to be obtained without any problem, respectively.

The sample specimens of Comparative Examples in Tables 1 to 4 were produced according to any of the steps P to T in Table 5.

The compositions and evaluation results of these sample specimens are shown in Tables 1 to 4.

Various characteristics of those sample specimens were analyzed and evaluated in the following manner. Herein, the thickness of the respective sample specimen was set at 0.15 mm.

(a) Area ratios of Cube orientation, Copper orientation, Brass orientation, S orientation, and RDW orientation

The measurement was conducted with the EBSD method in a measurement region of about 500 $\mu$m on each of the four sides, under the conditions of a scan step of 0.5 $\mu$m. The measured area was adjusted on the basis of the condition of inclusion of 200 or more grains. As an EBSD analyzer, OIM 5.0 (trade name) manufactured by TSL Solutions, Ltd., was used.

(b) Vickers hardness [Hv]

The cross-section of the respective sample specimen was mirror-ground and measured according to JIS Z 2244.

(c) 90° W-bending property

The 90° W-bending property was tested and evaluated according to JIS Z 2248. A sample was taken, by cutting out from the respective sample specimen perpendicularly to the rolling direction, into a size with width 10 mm and length 35 mm. The respective sample was subjected to W-bending such that the axis of bending would be perpendicular to the rolling direction, which is designated as GW (Good Way), and separately subjected to W-bending such that the axis of bending would be parallel to the rolling direction, which is designated as BW (Bad Way). The occurrence (i.e. whether occurred or not) of cracks at the thus-bent portion was examined, by observing the bent portion under an optical microscope with a magnification of 50x. A sample specimen which had no crack at the bent portion in each of the GW and BW, which is favorable, is rated as "excellent" (⊙) a sample specimen which had no crack but had large wrinkles, is rated as "good" (o), and a sample specimen which had cracks, which is not preferable, is rated as "poor" (x). The results of " "◉" " and "o" were judged to pass the criteria (acceptable). The bending angle at the respective bent portion was set at 90°, and the inner radius of the respective bent portion was set at 0.15 mm.

(d) 180°-tight U-bending property

A sample was taken out, by pressing the respective sample specimen perpendicularly to the rolling direction, into a size with width 1 mm and length 25 mm. The respective sample was subjected to W-bending such that the axis of bending would be perpendicular to the rolling direction, which is designated as GW (Good Way), and separately subjected to W-bending such that the axis of bending would be parallel to the rolling direction, which is designated as BW (Bad Way). The bending property was tested and evaluated according to JIS Z 2248. Preliminary bending was conducted using a 0.4-mm R 90° bending mold, and then a tight bending was conducted with a compression testing machine. The occurrence (i.e. whether occurred or not) of cracks in the outer side of the bent portion was examined, by observing the bent portion with the naked eye with an optical microscope with a magnification of 50x. A sample specimen which had no crack at the bent portion in each of the GW and BW and had minor wrinkles, is rated as "⊙" (excellent), a sample specimen which had no crack but had large wrinkles, is rated as "o" (good), and a sample specimen which had cracks, is rated as "x" (poor). "⊙" and "o" were judged to pass the criteria.

(e) 0.2% proof stress [YS]:

Each three test pieces that were cut out from the respective sample specimen in the direction parallel to the rolling direction, according to JIS Z2201-13B, were measured according to JIS Z2241, and the 0.2% proof stress (yield stress) is shown as an average value of the results. A sample specimen having an average value of 400 MPa or more was judged to pass the criteria.

(f) Electrical conductivity [EC]:

The electrical conductivity was calculated by using the four-terminal method to measure the specific resistance of the respective sample specimen in a thermostat bath that was maintained at 20°C ($\pm$0.5°C). The spacing between terminals was set to 100 mm. A sample specimen having electrical conductivity of 25%IACS or more was judged to pass the criteria.

(g) Young's modulus (Modulus of longitudinal elasticity)

A respective strip test piece with width 20 mm and length 200 mm was taken out from the sample specimen in the rolling parallel direction (the direction parallel to the rolling direction) and the rolling perpendicular direction (the direction perpendicular to the rolling direction), respectively, and a stress was applied to the test piece with a tensile tester in the longitudinal direction of the test piece. An amount of strain at yield was measured in advance, a strain amount that was 80% of that when yielded, was taken as the maximum strain amount, and a fraction of the respective strain obtained by dividing the maximum strain amount into ten fractions was applied to the sample specimen, thereby to find the proportional constant of the strain and stress from the ten points. Test pieces were collected in both the parallel and perpendicular directions to the rolling direction and measured, and the average value thereof was defined as a Young's modulus. A sample specimen having the Young's modulus of 120 GPa or less was judged to pass the criteria.

(h) Deflection factor

The deflection factor was measured by the cantilever method, according to the Technical Standard of JCBA T312:2002 of the Japan Copper and Brass Association. Test pieces were taken out from the sample specimen in each of the parallel and perpendicular directions to the rolling direction and measured, and the average value thereof was defined as a deflection factor. A sample specimen having deflection factor of 105 GPa or less was judged to pass the criteria.

(i) Average grain size

According to the cutting method in JIS-H0501, the cross-section that was parallel to the thickness direction of and also parallel to the rolling direction of the sample specimen was mirror-ground, etched and measured. The respective average grain sizes in the parallel direction and perpendicular direction to the final cold-rolling direction were measured, and the average value thereof was defined as the average grain size.

(j) Aspect ratio of grain [a/b]

In the above-mentioned calculation of the average grain size, another calculation was made on the ratio of the average grain size (a) that was measured in the direction parallel to the cold-rolling direction and the average grain size (b) that was measured in the direction perpendicular to the cold-rolling direction. Since a grain generally has an ellipsoidal shape extending in the rolling direction, the aspect ratio of the grain was evaluated in terms of the ratio a/b, in which a is a long axis and b is a short axis.

(k) X-ray diffraction intensity [I(h k l)]

The sample specimen was irradiated with X-ray by a reflection method, using copper or molybdenum as a target, and using X-ray of K$\alpha$. The measurement was conducted under conditions of a tube current of 20 mA and a tube voltage of 40 kV, a background of a diffraction intensity was removed from a profile of diffraction angle and diffraction intensity, and an integrated diffraction intensity I(h k l) was obtained, which is a combination of K$\alpha$1 and K$\alpha$2 of the respective peaks. Herein, (h k l) is an index of a crystal plane that is oriented toward ND that causes diffraction. A ratio to an integration diffraction intensity $I_0$(h k l), which was measured in a standard powder of pure copper, corresponding to the case where orientation is random, i.e. I(h k l)/$I_0$(h k l), was calculated, and the ratio was defined as an X-ray diffraction intensity.

The crystal orientation found in the present invention cannot be specified by this numerical value, and this numerical value is used for showing a reference valve in the case where the orientation is simply evaluated by this method.

(l) Dispersion density of second phase particles

The mirror-ground sample specimen was etched, followed by observing under FE-SEM at the magnification of 100,000x, and then the number of second phase particles with a size of 30 to 1,000 nm was counted and divided by the measured area, to calculate a density (per $mm^2$). As the FE-SEM, 7001 FA (manufactured by JEOL Ltd.) was used. When the second phase particles had an ellipsoidal shape or sheet shape, the particles were counted only when the length of the longer diameter would be 30 to 1,000 nm.

(m) Stress relaxation ratio [SRR]

The stress relaxation ratio was measured from a residual permanent strain, which was obtained, by applying an initial stress that was 80% of the yield stress (proof stress) as a load to the sample specimen by the cantilever method, and retaining the sample specimen at 150°C for 1,000 hours, according to Technical Standard JCBA T309:2004 of the Japan Copper and Brass Association (this corresponds to EMAS-3003, the former Technical Standard of the "Electronic Materials Manufacturer's Association of Japan"). A test piece was collected in the direction perpendicular to rolling. The sample having a stress relaxation ratio of 30% or less was judged to pass the criteria.

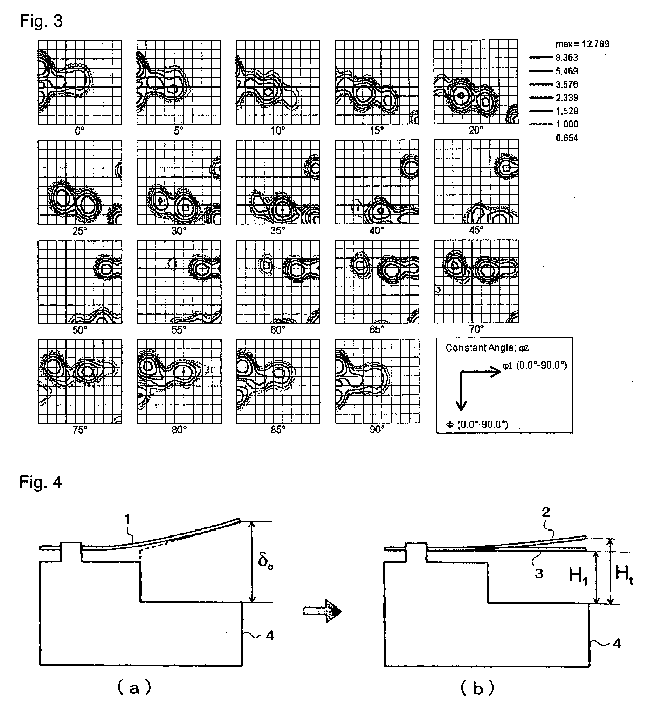

Figs. 4(a) and 4(b) each are a drawing explaining the method of testing the stress relaxation resistance, in which Fig. 4 (a) shows the state before heat treatment, and Fig. 4(b) shows the state after the heat treatment. As shown in Fig. 4(a), the position of a test specimen 1 when the initial stress of 80% of the proof stress was applied to the test specimen 1 cantilevered on a test bench 4, is defined as the distance $\delta_0$ from the reference position. This test specimen was kept in a thermostat at 150°C for 1,000 hours (which corresponds to the heat treatment at the state of the test specimen 1). The position of the test specimen 2 after removing the load, is defined as the distance $H_t$ from the reference position, as shown in Fig. 4(b). The reference numeral 3 denotes the test specimen to which no stress was applied, and the position of the test specimen 3 is defined as the distance $H_1$ from the reference position. Based on the relationships between those positions, the stress relaxation ratio (%) was calculated as: $\{(H_t - H_1)/(\delta_0 - H_1)\} \times 100$. In the formula, $\delta_0$ represents the distance from the reference position to the test specimen 1; $H_1$ represents the distance from the reference position to the test specimen 3; and $H_t$ represents the distance from the reference position to the test specimen 2.

(n) Surface roughness

The mathematical average roughness (Ra) and maximum height (Rz) of the sample specimen were measured according to JIS B 0601 (2001), by using a surface roughness meter SE-30 H (manufactured by Kosaka Laboratory Ltd.). The measured length was 4 mm, and the measurement was conducted in the direction perpendicular to the rolling direction.

(o) Pressing property

Pressing was conducted according to Technical Standard JCBA T312:2002 of the Japan Copper and Brass Association, and the burr height was measured.

(p) Amount of springback

After 90°W-bending was conducted, the bending angle was observed from the cross-section, and an angle opened from 90° was measured.

(q) Orientation density

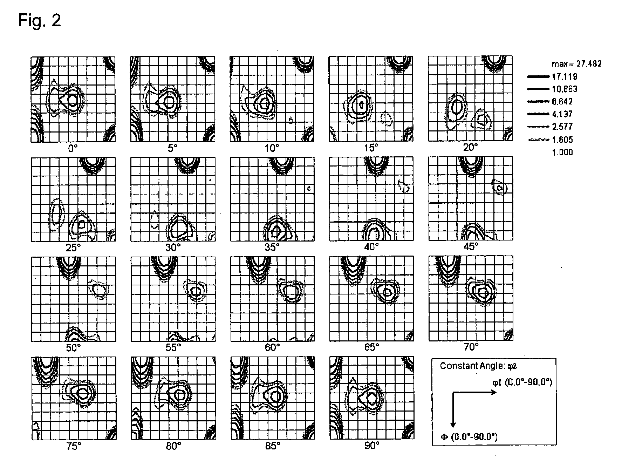

The orientation distribution measured by the EBSD method, was expanded, by using the generalization spherical harmonics proposed by Bunge, and the Orientation Distribution Function (ODF) was calculated. The expansion degree at that time was 16. The orientation densities of Cube orientation and the like are shown in Tables 1 to 4. The ODF map of Example 1 is shown in Fig. 2, and the ODF map of Comparative Example 1 is shown in Fig. 3. In Fig. 2 and Fig. 3, maps each having a horizontal axis $\varphi 1$ and a longitudinal axis $\Phi$ are shown by every 5° at $\varphi 2$ of from 0° to 90°. The Cube orientation density is shown by the position where $(\varphi 1, \Phi, \varphi 2)$ are $(0°, 0°, 0°)$.

The orientation density in the case where the crystal orientation distribution is completely random is 1, and the orientation density shows the degree of multiply of accumulated state of the objective orientation component to the state of completely random orientation.

Table 1

| ID number | Alloying elements mass% | Production steps | Area ratio of Cube orientation % | Area ratio of Copper orientation % | Area ratio of Brass orientation % | Area ratio of S orientation % | Area ratio of RDW orientation % |
|---|---|---|---|---|---|---|---|
| Ex 1-1 | Zr=0.06 | D | 68 | 3 | 6 | 4 | 6 |
| Ex 1-2 | Cr=0.06 | D | 25 | 6 | 11 | 11 | 9 |
| Ex 1-3 | Ti=0.06 | D | 27 | 5 | 12 | 10 | 8 |
| Ex 1-4 | Cr=0.25, Zr=0.13 | A | 35 | 2 | 3 | 6 | 7 |
| Ex 1-5 | Cr=0.25, Zr=0.13 | D | 26 | 6 | 16 | 7 | 8 |
| Ex 1-6 | Cr=0.29, Zr=0.47, Ti=0.18 | B | 21 | 5 | 18 | 12 | 6 |
| Ex 1-7 | Cr=0.55, Zr=0.21, Ti=0.18 | B | 18 | 5 | 18 | 11 | 2 |
| Ex 1-8 | Cr=0.32, Zn=0.12, Sn=0.15 | C | 24 | 1 | 2 | 5 | 6 |
| Ex 1-9 | Cr=0.21, Si=0.03, Sn=0.15 | B | 36 | 3 | 2 | 6 | 3 |
| Ex 1-10 | Cr=0.32, Ti=0.05, Ni=0.04, Ag=0.04 | A | 47 | 2 | 1 | 5 | 5 |
| Ex1-11 | Cr=0.21, Mn=0.05, B=0.05, P=0.01 | D | 7 | 10 | 18 | 25 | 2 |
| Ex1-12 | Zr=0.11, Mg=0.05, Co=0.05, Hf=0.01 | B | 55 | 3 | 5 | 12 | 3 |

"Ex" means Example (the same will be applied herein).

Table 1 (continued)

| ID number | I(200)/Io(200) | I(220)/Io(220) | I(111)/Io(111) | I(420)/Io(420) | Grain size μm | Second phase of 30 to 1,000 nm /mm² |
|---|---|---|---|---|---|---|
| Ex 1-1 | 45 | 4 | 1 | 9 | 19 | $2 \times 10^5$ |
| Ex 1-2 | 21 | 5 | 1 | 8 | 16 | $3 \times 10^6$ |
| Ex 1-3 | 24 | 5 | 1 | 8 | 21 | $2 \times 10^5$ |
| Ex 1-4 | 26 | 3 | 2 | 6 | 22 | $3 \times 10^6$ |
| Ex 1-5 | 18 | 3 | 3 | 10 | 21 | $3 \times 10^5$ |
| Ex 1-6 | 15 | 8 | 1 | 3 | 13 | $8 \times 10^6$ |
| Ex 1-7 | 17 | 8 | 1 | 5 | 12 | $2 \times 10^7$ |
| Ex 1-8 | 15 | 3 | 4 | 7 | 18 | $7 \times 10^6$ |
| Ex 1-9 | 26 | 2 | 2 | 3 | 26 | $8 \times 10^6$ |
| Ex 1-10 | 33 | 1 | 1 | 6 | 30 | $6 \times 10^7$ |
| Ex 1-11 | 9 | 11 | 2 | 2 | 16 | $8 \times 10^6$ |
| Ex 1-12 | 35 | 4 | 1 | 7 | 18 | $8 \times 10^6$ |

Table 1 (continued)

| ID number | Bending property | | Modulus of longitudinal elasticity GPa | Deflection factor GPa | Hv | YS MPa | EC %IACS | SRR % |
|---|---|---|---|---|---|---|---|---|
| | 90° W-bending | 180°-tight U-bending | | | | | | |
| Ex 1-1 | ◉ | ◉ | 108 | 96 | 132 | 425 | 85.0 | 12.6 |
| Ex 1-2 | ○ | ○ | 109 | 99 | 141 | 452 | 81.1 | 26.8 |
| Ex 1-3 | ◉ | ◉ | 107 | 98 | 125 | 411 | 61.3 | 15.8 |
| Ex 1-4 | ◉ | ◉ | 100 | 86 | 168 | 513 | 76.8 | 16.3 |
| Ex 1-5 | ○ | ○ | 105 | 95 | 172 | 534 | 76.2 | 17.2 |
| Ex 1-6 | ○ | ○ | 108 | 101 | 168 | 512 | 38.6 | 12.2 |
| Ex 1-7 | ○ | ○ | 109 | 99 | 178 | 562 | 71.2 | 11.8 |
| Ex 1-8 | ○ | ○ | 104 | 92 | 174 | 532 | 79.5 | 29.4 |
| Ex 1-9 | ○ | ○ | 107 | 94 | 167 | 511 | 80.5 | 26.8 |
| Ex 1-10 | ○ | ○ | 103 | 91 | 172 | 524 | 81.2 | 16.8 |
| Ex 1-11 | ○ | ○ | 118 | 104 | 152 | 450 | 74.1 | 26.8 |
| Ex 1-12 | ◉ | ◉ | 101 | 88 | 148 | 442 | 82.1 | 15.2 |

Table 1 (continued)

| ID number | Alloying elements | Production steps | Area ratio of Cube orientation | Area ratio of Copper orientation | Area ratio of Brass orientation | Area ratio of S orientation | Area ratio of RDW orientation |
|---|---|---|---|---|---|---|---|
| | mass% | | % | % | % | % | % |
| C Ex 1-1 | Cr=0.25, Zr=0.13 | P | 2 | 3 | 10 | 20 | 6 |
| C Ex 1-2 | Cr=0.25, Zr=0.13 | Q | 3 | 6 | 7 | 17 | 8 |
| C Ex 1-3 | Cr=0.25, Zr=0.13 | R | 3 | 5 | 8 | 18 | 7 |
| C Ex 1-4 | Cr=0.25, Zr=0.13 | S | 1 | 4 | 9 | 16 | 5 |
| C Ex 1-5 | Cr=0.25, Zr=0.13 | T | 75 | 1 | 2 | 3 | 2 |
| C Ex 1-6 | Cr=0.02, Zr=0.01 | B | 52 | 4 | 5 | 5 | 8 |
| C Ex 1-7 | Cr=0.88, Zr=0.12, Ti=0.08 | The sample specimen was unable to produce, due to edge cracks upon hot-rolling. | | | | | |
| C Ex 1-8 | Cr=0.21, Mn=0.81, B=0.11, P=0.11 | D | 3 | 12 | 8 | 14 | 7 |
| C Ex 1-9 | Cr=0.21, Sn=0.61, Si=0.45 | B | 3 | 11 | 22 | 14 | 7 |

"C Ex" means Comparative Example (the same will be applied herein).

Table 1 (continued)

| ID number | I(200)/Io(200) | I(220)/Io(220) | I(111)/Io(111) | I(420)/Io(420) | Grain size | Second phase of 30 to 1,000 nm |
|---|---|---|---|---|---|---|
| | | | | | µm | /mm$^2$ |
| C Ex 1-1 | 1 | 10 | 1 | 4 | 18 | $4\times10^6$ |
| C Ex 1-2 | 2 | 9 | 2 | 5 | 21 | $6\times10^6$ |
| C Ex 1-3 | 2 | 7 | 2 | 5 | 23 | $6\times10^6$ |
| C Ex 1-4 | 1 | 8 | 1 | 4 | 24 | $3\times10^6$ |
| C Ex 1-5 | 55 | 1 | 1 | 2 | 55 | $3\times10^6$ |
| C Ex 1-6 | 30 | 2 | 1 | 1 | 25 | $2\times10^5$ |
| C Ex 1-7 | The sample specimen was unable to produce, due to edge cracks upon hot-rolling. | | | | | |
| C Ex 1-8 | 1 | 8 | 1 | 3 | 8 | $8\times10^5$ |
| C Ex 1-9 | 1 | 3 | 1 | 2 | 11 | $7\times10^6$ |

EP 2 610 359 A1

Table 1 (continued)

| ID number | Bending property | | Modulus of longitudinal elasticity | Deflection factor | Hv | YS | EC | SRR |
|---|---|---|---|---|---|---|---|---|
| | 90° W-bending | 180°-tight U-bending | GPa | GPa | | MPa | %IACS | % |
| C Ex 1-1 | × | × | 128 | 117 | 201 | 596 | 78.5 | 16.8 |
| C Ex 1-2 | × | × | 131 | 119 | 205 | 608 | 76.8 | 18.2 |
| C Ex 1-3 | × | × | 129 | 120 | 199 | 592 | 77.3 | 17.8 |
| C Ex 1-4 | × | × | 127 | 111 | 196 | 581 | 79.5 | 19.1 |
| C Ex 1-5 | × | × | 91 | 82 | 112 | 362 | 78.9 | 17.5 |
| C Ex 1-6 | ○ | ○ | 101 | 93 | 102 | 356 | 85.0 | 38.8 |
| C Ex 1-7 | The sample specimen was unable to produce, due to edge cracks upon hot-rolling. | | | | | | | |
| C Ex 1-8 | × | × | 128 | 111 | 138 | 452 | 32.1 | 27.8 |
| C Ex 1-9 | × | × | 127 | 109 | 140 | 461 | 23.1 | 28.5 |

Table 2

| ID number | Alloying elements mass% | Production steps | Area ratio of Cube orientation % | Area ratio of Copper orientation % | Area ratio of Brass orientation % | Area ratio of S orientation % | Area ratio of RDW orientation % |
|---|---|---|---|---|---|---|---|
| Ex 2-1 | Be=0.12 | D | 36 | 4 | 7 | 15 | 5 |
| Ex 2-2 | Ni=0.12 | C | 68 | 9 | 5 | 18 | 3 |
| Ex 2-3 | Be=0.28, Ni=1.42 | C | 47 | 6 | 15 | 12 | 5 |
| Ex 2-4 | Be=0.32, Ni=1.52, Al=0.45, Co=0.11 | A | 25 | 1 | 8 | 10 | 6 |
| Ex 2-5 | Be=0.28, Ni=1.42, Ag=0.15 | B | 17 | 4 | 9 | 11 | 8 |
| Ex 2-6 | Be=1.92, Ni=0.13, Co=0.31 | C | 7 | 4 | 11 | 13 | 5 |
| Ex 2-7 | Be=0.32, Ni=1.52, Sn=0.11, Mg=0.05, Cr=0.15 | B | 31 | 6 | 17 | 13 | 6 |
| Ex 2-8 | Be=0.32, Ni=1.52, Mn=0.05, Zn=0.11, B=0.03 | D | 24 | 5 | 16 | 15 | 3 |
| Ex 2-9 | Be=0.32, Ni=1.52, Ti=0.05, Zr=0.05, Hf=0.05, P=0.01 | B | 15 | 3 | 21 | 11 | 5 |

Table 2 (continued)

| ID number | I(200)/Io(200) | I(220)/Io(220) | I(111)/Io(111) | I(420)/Io(420) | Grain size μm | Second phase of 30 to 1,000nm /mm² |
|---|---|---|---|---|---|---|
| Ex 2-1 | 22 | 5 | 1 | 2 | 26 | $8 \times 10^5$ |
| Ex 2-2 | 44 | 2 | 1 | 2 | 21 | $3 \times 10^5$ |
| Ex 2-3 | 30 | 11 | 0 | 2 | 24 | $7 \times 10^6$ |
| Ex 2-4 | 17 | 5 | 2 | 4 | 25 | $4 \times 10^7$ |
| Ex 2-5 | 13 | 6 | 1 | 6 | 16 | $6 \times 10^7$ |
| Ex 2-6 | 7 | 8 | 3 | 4 | 16 | $8 \times 10^7$ |
| Ex 2-7 | 25 | 10 | 1 | 3 | 14 | $8 \times 10^7$ |
| Ex 2-8 | 22 | 11 | 0 | 1 | 12 | $4 \times 10^7$ |
| Ex 2-9 | 12 | 15 | 1 | 3 | 14 | $3 \times 10^7$ |

Table 2 (continued)

| ID number | Bending property | | Modulus of longitudinal elasticity | Deflection Factor | Hv | YS | EC | SRR |
|---|---|---|---|---|---|---|---|---|
| | 90° W-bending | 180°-tight U-bending | GPa | GPa | | MPa | %IACS | % |
| Ex 2-1 | ◉ | ◉ | 114 | 99 | 135 | 441 | 76.2 | 28.6 |
| Ex 2-2 | ◉ | ◉ | 101 | 86 | 123 | 425 | 85.0 | 29.5 |
| Ex 2-3 | ◉ | ◉ | 106 | 92 | 231 | 706 | 42.1 | 25.6 |
| Ex 2-4 | ○ | ○ | 101 | 89 | 252 | 765 | 41.5 | 24.5 |
| Ex 2-5 | ○ | ○ | 116 | 103 | 234 | 712 | 48.9 | 23.6 |
| Ex 2-6 | ○ | ○ | 118 | 105 | 281 | 842 | 25.1 | 24.8 |
| Ex 2-7 | ○ | ○ | 111 | 96 | 261 | 776 | 35.8 | 16.8 |
| Ex 2-8 | ○ | ○ | 118 | 99 | 252 | 760 | 36.2 | 21.5 |
| Ex 2-9 | ○ | ○ | 121 | 105 | 248 | 755 | 38.9 | 14.5 |

Table 2 (continued)

| ID number | Alloying elements | Production steps | Area ratio of Cube orientation | Area ratio of Copper orientation | Area ratio of Brass orientation | Area ratio of S orientation | Area ratio of RDW orientation |
|---|---|---|---|---|---|---|---|
| | mass% | | % | % | % | % | % |
| C Ex 2-1 | Be=0.32, Ni=1.52, Al=0.45, Co=0.11 | P | 1 | 3 | 5 | 22 | 10 |
| C Ex 2-2 | Be=0.32, Ni=1.52, Al=0.45, Co=0.11 | Q | 2 | 7 | 11 | 18 | 5 |
| C Ex 2-3 | Be=0.32, Ni=1.52, Al=0.45, Co=0.11 | R | 1 | 8 | 13 | 16 | 3 |
| C Ex 2-4 | Be=0.32, Ni=1.52, Al=0.45, Co=0.11 | S | 1 | 7 | 15 | 19 | 2 |
| C Ex 2-5 | Be=0.32, Ni=1.52, Al=0.45, Co=0.11 | T | 72 | 3 | 5 | 5 | 1 |
| C Ex 2-6 | Be=0.04, Ni=0.04 | B | 33 | 12 | 8 | 15 | 5 |
| C Ex 2-7 | Be=2.55, Ni=0.52 | B | 11 | 5 | 18 | 15 | 5 |
| C Ex 2-8 | Be=0.32, Ni=1.52, Ti=0.45, Zr=0.05, Hf=0.05, Al=1.52 | B | 12 | 4 | 16 | 20 | 2 |
| C Ex 2-9 | Be=0.32, Ni=1.52, Cr=0.21, Mn=1.59, B=0.11, P=0.11 | B | 4 | 5 | 16 | 12 | 3 |
| C Ex 2-10 | Be=0.32, Ni=1.52, Cr=0.11, Sn=1.18, Si=0.81 | B | 3 | 6 | 16 | 22 | 12 |

Table 2 (continued)

| ID number | I(200)/Io(200) | I(220)/Io(220) | I(111)/Io(111) | I(420)/Io(420) | Grain size | Second phase of 30 to 1,000 nm |
|---|---|---|---|---|---|---|
| | | | | | μm | /mm$^2$ |
| C Ex 2-1 | 1 | 4 | 2 | 4 | 19 | $4 \times 10^7$ |
| C Ex 2-2 | 1 | 6 | 1 | 2 | 16 | $2 \times 10^7$ |
| C Ex 2-3 | 1 | 6 | 1 | 1 | 15 | $7 \times 10^7$ |
| C Ex 2-4 | 1 | 7 | 1 | 1 | 16 | $6 \times 10^7$ |
| C Ex 2-5 | 43 | 3 | 0 | 1 | 46 | $1 \times 10^7$ |
| C Ex 2-6 | 22 | 5 | 1 | 3 | 25 | $3 \times 10^5$ |
| C Ex 2-7 | 7 | 13 | 1 | 2 | 16 | $8 \times 10^7$ |
| C Ex 2-8 | 5 | 8 | 0 | 1 | 14 | $7 \times 10^6$ |
| C Ex 2-9 | 1 | 7 | 0 | 1 | 17 | $6 \times 10^7$ |
| C Ex 2-10 | 5 | 10 | 1 | 8 | 16 | $1 \times 10^7$ |

Table 2 (continued)

| ID number | Bending property | | Modulus of longitudinal elasticity | Deflection factor | Hv | YS | EC | SRR |
|---|---|---|---|---|---|---|---|---|
| | 90° W-bending | 180°-tight U-bending | GPa | GPa | | MPa | %IACS | % |
| C Ex 2-1 | × | × | 133 | 112 | 267 | 796 | 36.7 | 22.3 |
| C Ex 2-2 | × | × | 135 | 117 | 265 | 775 | 34.8 | 23.2 |
| C Ex 2-3 | × | × | 131 | 118 | 258 | 762 | 36.9 | 21.5 |
| C Ex 2-4 | × | × | 131 | 117 | 261 | 749 | 35.9 | 22.5 |
| C Ex 2-5 | × | × | 106 | 86 | 221 | 695 | 34.6 | 18.6 |
| C Ex 2-6 | ◉ | ◉ | 112 | 98 | 108 | 365 | 87.5 | 41.2 |
| C Ex 2-7 | ○ | ○ | 118 | 107 | 278 | 836 | 21.6 | 16.8 |
| C Ex 2-8 | ○ | ○ | 116 | 101 | 250 | 730 | 16.5 | 15.6 |
| C Ex 2-9 | × | × | 135 | 118 | 255 | 760 | 17.2 | 15.2 |
| C Ex 2-10 | × | × | 133 | 112 | 248 | 725 | 18.6 | 19.6 |

22

Table 3

| ID number | Alloying elements | Production steps | Area ratio of Cube orientation | Area ratio of Copper orientation | Area ratio of Brass orientation | Area ratio of S orientation | Area ratio of RDW orientation |
|---|---|---|---|---|---|---|---|
| | mass% | | % | % | % | % | % |
| Ex 3-1 | Ni=0.04, P=0.02 | B | 62 | 5 | 6 | 4 | 3 |
| Ex 3-2 | Sn=0.04, P=0.02 | B | 31 | 8 | 7 | 16 | 2 |
| Ex 3-3 | Ni=1.21, P=0.05, Sn=0.88 | C | 23 | 3 | 7 | 7 | 6 |
| Ex 3-4 | Ni=1.21, P=0.05, Sn=0.88 | D | 18 | 6 | 16 | 9 | 5 |
| Ex 3-5 | Ni=1.07, P=0.06, Sn=0.95, Mg=0.12, Ti=0.11 | B | 56 | 2 | 1 | 5 | 8 |
| Ex 3-6 | Ni=1.17, P=0.05, Sn=1.62 | A | 68 | 4 | 3 | 5 | 6 |
| Ex 3-7 | Ni=1.72, P=0.07, Sn=0.78 | B | 31 | 3 | 5 | 7 | 8 |
| Ex 3-8 | Ni=0.32, P=0.06, Sn=1.82 | B | 42 | 5 | 2 | 6 | 6 |
| Ex 3-9 | Ni=4.42, P=0.03, Sn=0.12 | A | 7 | 5 | 22 | 16 | 3 |
| Ex 3-10 | Ni=1.21, P=0.05, Sn=0.88, Si=0.01, Cr=0.02, Zr=0.02, Co=0.05 | B | 9 | 6 | 18 | 13 | 2 |
| Ex 3-11 | Ni=1.21, P=0.05, Sn=0.88, Zn=0.22, Ag=0.05, Mn=0.05, Hf=0.05 | C | 8 | 7 | 19 | 15 | 3 |

Table 3 (continued)

| ID number | I(200)/Io(200) | I(220)/Io(220) | I(111)/Io(111) | I(420)/Io(420) | Grain size | Second phase of 30 to 1,000 nm |
|---|---|---|---|---|---|---|
| | | | | | µm | /mm$^2$ |
| Ex 3-1 | 33 | 2 | 0 | 1 | 32 | 7×10$^4$ |
| Ex 3-2 | 15 | 4 | 1 | 1 | 23 | 2×10$^4$ |
| Ex 3-3 | 17 | 7 | 2 | 4 | 21 | 2×10$^4$ |
| Ex 3-4 | 12 | 5 | 3 | 4 | 19 | 3×10$^4$ |
| Ex 3-5 | 42 | 2 | 3 | 6 | 28 | 6×10$^5$ |
| Ex 3-6 | 51 | 3 | 1 | 5 | 38 | 5×10$^5$ |
| Ex 3-7 | 23 | 5 | 3 | 6 | 23 | 6×10$^5$ |
| Ex 3-8 | 33 | 2 | 4 | 5 | 31 | 6×10$^6$ |
| Ex 3-9 | 4 | 20 | 2 | 1 | 11 | 6×10$^5$ |
| Ex 3-10 | 5 | 5 | 2 | 1 | 16 | 8×10$^6$ |
| Ex 3-11 | 5 | 12 | 1 | 1 | 18 | 5×10$^5$ |

Table 3 (continued)

| ID number | Bending property | | Modulus of longitudinal elasticity | Deflection factor | Hv | YS | EC | SRR |
|---|---|---|---|---|---|---|---|---|
| | 90° W-bending | 180°-tight U-bending | GPa | GPa | | MPa | %IACS | % |
| Ex 3-1 | ◉ | ◉ | 102 | 86 | 128 | 421 | 81.3 | 24.7 |
| Ex 3-2 | ◉ | ◉ | 101 | 88 | 124 | 411 | 82.6 | 28.7 |
| Ex 3-3 | ○ | ○ | 115 | 101 | 184 | 562 | 38.2 | 21.4 |
| Ex 3-4 | ○ | ○ | 114 | 100 | 193 | 584 | 37.8 | 22.1 |
| Ex 3-5 | ◉ | ◉ | 103 | 91 | 193 | 587 | 35.2 | 15.6 |
| Ex 3-6 | ◉ | ◉ | 95 | 85 | 172 | 524 | 41.3 | 22.7 |
| Ex 3-7 | ○ | ○ | 103 | 91 | 176 | 536 | 36.1 | 19.6 |
| Ex 3-8 | ◉ | ◉ | 106 | 94 | 168 | 514 | 33.2 | 28.9 |
| Ex 3-9 | ○ | ○ | 117 | 102 | 202 | 602 | 28.4 | 16.6 |
| Ex 3-10 | ○ | ○ | 115 | 101 | 175 | 562 | 34.5 | 16.8 |
| Ex 3-11 | ○ | ○ | 116 | 104 | 181 | 546 | 38.9 | 18.9 |

Table 3 (continued)

| ID number | Alloying elements mass% | Production steps | Area ratio of Cube orientation % | Area ratio of Copper orientation % | Area ratio of Brass orientation % | Area ratio of S orientation % | Area ratio of RDW orientation % |
|---|---|---|---|---|---|---|---|
| C Ex 3-1 | Ni=1.21, P=0.05, Sn=0.88 | P | 1 | 4 | 9 | 11 | 6 |
| C Ex 3-2 | Ni=1.21, P=0.05, Sn=0.88 | Q | 1 | 8 | 23 | 16 | 13 |
| C Ex 3-3 | Ni=1.21, P=0.05, Sn=0.88 | R | 3 | 3 | 10 | 14 | 7 |
| C Ex 3-4 | Ni=1.21, P=0.05, Sn=0.88 | S | 1 | 2 | 12 | 18 | 4 |
| C Ex 3-5 | Ni=1.21, P=0.05, Sn=0.88 | T | 73 | 1 | 2 | 3 | 2 |
| C Ex 3-6 | Ni=0.01, P=0.03, Sn=0.01 | B | 42 | 6 | 11 | 3 | 2 |
| C Ex 3-7 | Ni=1.07, P=0.005, Sn=0.88 | B | 33 | 6 | 14 | 12 | 5 |
| C Ex 3-8 | Ni=0.12, P=0.03, Sn=5.12 | B | 4 | 2 | 25 | 22 | 1 |
| C Ex 3-9 | Ni=1.21, P=0.33, Sn=0.88 | B | 3 | 5 | 11 | 8 | 5 |
| C Ex 3-10 | Ni=1.21, P=0.05, Sn=2.52, Zn=2.08 | B | 9 | 6 | 8 | 12 | 1 |

Table 3 (continued)

| ID number | I(200)/Io(200) | I(220)/Io(220) | I(111)/Io(111) | I(420)/Io(420) | Grain size µm | Second phase of 30 to 1,000 nm /mm$^2$ |
|---|---|---|---|---|---|---|
| C Ex 3-1 | 2 | 7 | 2 | 5 | 19 | $3 \times 10^4$ |
| C Ex 3-2 | 1 | 15 | 2 | 2 | 16 | $3 \times 10^4$ |
| C Ex 3-3 | 2 | 8 | 1 | 3 | 21 | $3 \times 10^4$ |
| C Ex 3-4 | 1 | 9 | 1 | 5 | 21 | $3 \times 10^4$ |
| C Ex 3-5 | 54 | 1 | 1 | 2 | 47 | $3 \times 10^4$ |
| C Ex 3-6 | 32 | 5 | 1 | 1 | 21 | $1 \times 10^4$ |
| C Ex 3-7 | 16 | 5 | 2 | 1 | 19 | $1 \times 10^2$ |
| C Ex 3-8 | 2 | 18 | 1 | 1 | 7 | $6 \times 10^5$ |
| C Ex 3-9 | 2 | 4 | 0 | 1 | 12 | $8 \times 10^6$ |
| C Ex 3-10 | 3 | 4 | 1 | 1 | 8 | $6 \times 10^5$ |

EP 2 610 359 A1

Table 3 (continued)

| ID number | Bending property | | Modulus of longitudinal elasticity | Deflection factor | Hv | YS | EC | SRR |
|---|---|---|---|---|---|---|---|---|
| | 90° W-bending | 180°-tight U-bending | GPa | GPa | | MPa | %IACS | % |
| C Ex 3-1 | × | × | 124 | 113 | 206 | 612 | 38.2 | 22.3 |
| C Ex 3-2 | × | × | 132 | 116 | 211 | 628 | 37.6 | 26.2 |
| C Ex 3-3 | × | × | 127 | 117 | 204 | 606 | 38.1 | 21.2 |
| C Ex 3-4 | × | × | 126 | 117 | 203 | 603 | 38.1 | 20.5 |
| C Ex 3-5 | × | × | 92 | 81 | 194 | 581 | 37.5 | 18.6 |
| C Ex 3-6 | ◉ | ◉ | 100 | 88 | 107 | 352 | 89.9 | 46.8 |
| C Ex 3-7 | ○ | ○ | 110 | 100 | 122 | 402 | 39.5 | 38.9 |
| C Ex 3-8 | × | × | 128 | 115 | 206 | 605 | 15.5 | 25.1 |
| C Ex 3-9 | × | × | 127 | 114 | 185 | 579 | 22.1 | 24.9 |
| C Ex 3-10 | ○ | ○ | 116 | 101 | 184 | 568 | 24.1 | 28.6 |

Table 4

| ID number | Alloying elements | Production steps | Area ratio of Cube orientation | Area ratio of Copper orientation | Area ratio of Brass orientation | Area ratio of S orientation | Area ratio of RDW orientation |
|---|---|---|---|---|---|---|---|
| | mass% | | % | % | % | % | % |
| Ex 4-1 | Mg=0.32, P=0.01 | C | 68 | 4 | 4 | 5 | 2 |
| Ex 4-2 | Mg=0.68, P=0.05 | A | 45 | 1 | 3 | 6 | 4 |
| Ex 4-3 | Mg=0.82, P=0.07, Sn=0.15, Zr=0.05 | B | 23 | 3 | 5 | 6 | 6 |
| Ex 4-4 | Mg=1.92, P=0.02 | B | 11 | 4 | 5 | 4 | 2 |
| Ex 4-5 | Mg=0.68, P=0.02, Ni=0.08, Co=0.08, Cr=0.11 | A | 21 | 7 | 6 | 8 | 2 |
| Ex 4-6 | Mg=0.68, P=0.02, Zn=0.21, Ag=0.12, B=0.04 | B | 33 | 5 | 10 | 15 | 5 |
| Ex 4-7 | Mg=0.68, P=0.02, Mn=0.05, Ti=0.12, Hf=0.04 | A | 12 | 8 | 15 | 18 | 3 |
| Ex 4-8 | Mg=0.68, P=0.02 | B | 48 | 1 | 2 | 5 | 3 |

EP 2 610 359 A1

Table 4 (continued)

| ID number | I(200)/Io(200) | I(220)/Io(220) | I(111)/Io(111) | I(420)/Io(420) | Grain size | Second phase of 30 to 1,000 nm |
|---|---|---|---|---|---|---|
| | | | | | µm | /mm$^2$ |
| Ex 4-1 | 41 | 1 | 1 | 1 | 28 | $2 \times 10^4$ |
| Ex 4-2 | 30 | 1 | 1 | 3 | 26 | $8 \times 10^4$ |
| Ex 4-3 | 16 | 4 | 2 | 5 | 18 | $7 \times 10^6$ |
| Ex 4-4 | 7 | 2 | 0 | 1 | 21 | $3 \times 10^6$ |
| Ex 4-5 | 15 | 5 | 1 | 1 | 18 | $4 \times 10^6$ |
| Ex 4-6 | 18 | 6 | 0 | 2 | 22 | $8 \times 10^4$ |
| Ex 4-7 | 7 | 4 | 1 | 1 | 16 | $6 \times 10^5$ |
| Ex 4-8 | 31 | 1 | 1 | 2 | 21 | $8 \times 10^4$ |

Table 4 (continued)

| ID number | Bending property | | Modulus of longitudinal elasticity | Deflection factor | Hv | YS | EC | SRR |
|---|---|---|---|---|---|---|---|---|
| | 90° W-bending | 180°-tight U-bending | GPa | GPa | | MPa | %IACS | % |
| Ex 4-1 | ◉ | ◉ | 102 | 92 | 128 | 409 | 62.5 | 22.5 |
| Ex 4-2 | ◉ | ◉ | 106 | 94 | 172 | 526 | 61.3 | 18.5 |
| Ex 4-3 | ○ | ○ | 103 | 91 | 183 | 557 | 55.4 | 17.9 |
| Ex 4-4 | ○ | ○ | 117 | 111 | 215 | 601 | 29.2 | 12.6 |
| Ex 4-5 | ○ | ○ | 115 | 102 | 168 | 425 | 55.8 | 15.6 |
| Ex 4-6 | ○ | ○ | 108 | 98 | 171 | 432 | 56.2 | 16.8 |
| Ex 4-7 | ○ | ○ | 118 | 102 | 169 | 411 | 54.2 | 18.3 |
| Ex 4-8 | ◉ | ◉ | 105 | 93 | 170 | 518 | 61.5 | 19.5 |

Table 4 (continued)

| ID number | Alloying elements mass% | Production steps | Area ratio of Cube orientation % | Area ratio of Copper orientation % | Area ratio of Brass orientation % | Area ratio of S orientation % | Area ratio of RDW orientation % |
|---|---|---|---|---|---|---|---|
| C Ex 4-1 | Mg=0.68, P=0.05 | P | 2 | 3 | 13 | 19 | 8 |
| C Ex 4-2 | Mg=0.68, P=0.02 | Q | 1 | 6 | 12 | 17 | 5 |
| C Ex 4-3 | Mg=0.68, P=0.02 | R | 3 | 4 | 5 | 8 | 3 |
| C Ex 4-4 | Mg=0.68, P=0.02 | S | 2 | 3 | 5 | 8 | 6 |
| C Ex 4-5 | Mg=0.68, P=0.02 | T | 72 | 7 | 6 | 8 | 5 |
| C Ex 4-6 | Mg=0.28, P=0.01 | B | 31 | 5 | 6 | 5 | 2 |
| C Ex 4-7 | Mg=2.08, P=0.03 | B | 3 | 8 | 10 | 9 | 3 |
| C Ex 4-8 | Mg=0.82, P=0.07, Sn=1.88, Ti=0.22 | B | 3 | 4 | 9 | 7 | 2 |

Table 4 (continued)

| ID number | I(200)/Io(200) | I(220)/Io(220) | I(111)/Io(111) | I(420)/Io(420) | Grain size µm | Second phase of 30 to 1,000 nm /mm² |
|---|---|---|---|---|---|---|
| C Ex 4-1 | 1 | 9 | 2 | 5 | 23 | $7 \times 10^6$ |
| C Ex 4-2 | 1 | 2 | 1 | 1 | 15 | $8 \times 10^4$ |
| C Ex 4-3 | 1 | 3 | 1 | 1 | 22 | $6 \times 10^5$ |
| C Ex 4-4 | 1 | 2 | 1 | 1 | 29 | $9 \times 10^5$ |
| C Ex 4-5 | 52 | 2 | 1 | 1 | 43 | $5 \times 10^5$ |
| C Ex 4-6 | 17 | 2 | 1 | 1 | 21 | $6 \times 10^5$ |
| C Ex 4-7 | 1 | 2 | 1 | 1 | 23 | $3 \times 10^6$ |
| C Ex 4-8 | 1 | 2 | 1 | 1 | 16 | $6 \times 10^5$ |

Table 4 (continued)

| ID number | Bending property | | Modulus of longitudinal elasticity | Deflection factor | Hv | YS | EC | SRR |
|---|---|---|---|---|---|---|---|---|
| | 90° W-bending | 180°-tight U-bending | GPa | GPa | | MPa | %IACS | % |
| C Ex 4-1 | × | × | 130 | 113 | 196 | 582 | 59.3 | 21.3 |
| C Ex 4-2 | × | × | 128 | 115 | 182 | 565 | 55.9 | 18.9 |
| C Ex 4-3 | × | × | 131 | 113 | 179 | 575 | 58.6 | 22.5 |
| C Ex 4-4 | × | × | 129 | 116 | 181 | 581 | 61.2 | 21.5 |
| C Ex 4-5 | × | × | 103 | 90 | 142 | 488 | 55.6 | 22.2 |
| C Ex 4-6 | ○ | ○ | 108 | 94 | 110 | 384 | 75.2 | 22.8 |
| C Ex 4-7 | × | × | 126 | 110 | 201 | 615 | 35.2 | 15.6 |
| C Ex 4-8 | × | × | 132 | 112 | 215 | 630 | 19.8 | 16.8 |

EP 2 610 359 A1

Table 5

| | Step A | Step B | Step C | Step D | Step P | Step Q | Step R | Step S | Step T |
|---|---|---|---|---|---|---|---|---|---|
| Intermediate rolling 1 | 70 to 99.9% | | | | | | | | |
| Annealing 1 | 300 to 600°C 1H to 15H | 250 to 700°C 5M to 20H | 200 to 750°C 5S to 20H | | None | 200 to 750°C 5S to 20H | | 751 to 1,000°C 5S to 20H | 200 to 750°C 5S to 20H |
| Intermediate rolling 2 | 5 to 30% | 4 to 40% | 2 to 50% | | None | 2 to 50% | 51 to 99.9% | 2 to 50% | |
| Annealing 2 | 400 to 1,000°C 5S to 10M | | | | | | | | 400 to 800°C 10H |
| Aging precipitation | 400 to 700°C 5M to 10H | | | | | | | | |
| Finish rolling | 0 to 25% | | | 25 to 40% | 0 to 25% | 50 to 95% | 0 to 25% | | |
| Temper annealing | 200 to 600°C 5S to 10H | | | | | | | | |

Notes: "H" means ---hour(s)---; "M" means ---minute(s)---; and "S" means ---second(s)---.    "None" means ---not done---.

As shown in Tables 1 to 4, Examples 1-1 to 1-12, Examples 2-1 to 2-9, Examples 3-1 to 3-11, and Examples 4-1 to 4-8 each had the area ratio of Cube orientation of 5% or more and 70% or less, and thus were excellent in the modulus of longitudinal elasticity, the deflection coefficient, the Vickers hardness, the bending property, the proof stress, the electrical conductivity, and the stress relaxation resistance. For example, in Examples 1-5 and 3-4, the total of the area ratios of Copper orientation and Brass orientation was more than 20%, and the bending property was slightly low in some cases but it was at an acceptable level.

In all of the test pieces, the value of the Young's modulus (i.e. the modulus of longitudinal elasticity) in the direction parallel to the rolling direction, was lower than that in the direction perpendicular to the rolling direction, and the difference was 2 to 20 GPa. Further, in all of the test pieces, the value of the deflection coefficient in the direction parallel to the rolling direction, was lower than that in the direction perpendicular to the rolling direction, and the difference was 2 to 20 GPa.

Contrary to the above, when any of the requirements in the present invention was not satisfied, the results were poor in any of the properties.

In Comparative Examples 1-1 to 1-4, the area ratio of Cube orientation was too low, resulting in poor in the bending property, the Young's modulus, and the deflection coefficient. In Comparative Example 1-5, the area ratio of Cube orientation was too high, resulting in poor in the Vickers hardness and the proof stress; further, the grain size was made in a coarsened state, resulting in poor in the bending property. In Comparative Example 1-6, the total amount of the main alloying elements Cr, Zr, and Ti was too small, resulting in poor in the Vickers hardness, the proof stress, and the stress relaxation resistance. In Comparative Example 1-7, the total amount of the main alloying elements Cr, Zr, and Ti was too large, resulting in a coarse crystallized product present in a large number, which lowers the rolling property, to cause edge cracks occurred upon the hot-working, thereby to result in stopping of the production in testing. In Comparative Example 1-8, the total amount of the additional alloying elements was too large, resulting in decreasing of the area ratio of Cube orientation, to result in poor in the bending property, the Young's modulus, and the deflection coefficient. In Comparative Example 1-9, the total amount of the additional alloying element was too large, resulting in decreasing of the area ratio of Cube orientation, to result in poor in the bending property, the Young's modulus, and the deflection coefficient, also poor in the electrical conductivity.

In Comparative Examples 2-1 to 2-4, the area ratio of Cube orientation was too low, resulting in poor in the bending property, the Young's modulus, and the deflection coefficient. In Comparative Example 2-5, the area ratio of Cube orientation was too high, resulting in that the grain size was made in a coarsened state, to result in poor in the bending property. In Comparative Example 2-6, the total amount of the main alloying elements Be and Ni was too small, resulting in poor in the Vickers hardness, the proof stress, and the stress relaxation resistance. In Comparative Example 2-7, the total amount of the main alloying elements Be and Ni was too large, resulting in poor in the electrical conductivity. In Comparative Example 2-8, the total amount of the additional alloying elements was too large, resulting in poor in the electrical conductivity. In Comparative Examples 2-9 and 2-10, the total amount of the additional alloying element was too large, resulting in decreasing of the area ratio of Cube orientation, to result in poor in the bending property, the Young's modulus, and the deflection coefficient, also poor in the electrical conductivity.

In Comparative Examples 3-1 to 3-4, the area ratio of Cube orientation was too low, resulting in poor in the bending property, the Young's modulus, and the deflection coefficient. In Comparative Example 3-5, the area ratio of Cube orientation was too high, resulting in that the grain size was made in a coarsened state, to result in poor in the bending property. In Comparative Example 3-6, the total amount of the main alloying elements Ni and Sn was too small, resulting in poor in the Vickers hardness, the proof stress, and the stress relaxation resistance. In Comparative Example 3-7, the amount of the main alloying element P was too small, resulting in poor in the stress relaxation resistance. In Comparative Example 3-8, the amount of the main alloying element Sn was too large, resulting in decreasing of the area ratio of Cube orientation, to result in poor in the bending property, the Young's modulus, and the deflection coefficient, also poor in the electrical conductivity. In Comparative Example 3-9, the amount of the main alloying element P was too large, resulting in decreasing of the area ratio of Cube orientation, to result in poor in the bending property, the Young's modulus, and the deflection coefficient, also poor in the electrical conductivity. In Comparative Examples 3-10, the total amount of the additional alloying elements was too large, resulting in poor in the electrical conductivity.

In Comparative Examples 4-1 to 4-4, the area ratio of Cube orientation was too low, resulting in poor in the bending property, the Young's modulus, and the deflection coefficient. In Comparative Example 4-5, the area ratio of Cube orientation was too high, and the grain size was made in a coarsened state, resulting in poor in the bending property. In Comparative Example 4-6, the total amount of the main alloying elements Mg and P was too small, resulting in poor in the Vickers hardness and the proof stress. In Comparative Example 4-7, the total amount of the main alloying elements Mg and P was too large, resulting in decreasing of the area ratio of Cube orientation, to result in poor in the bending property, the Young's modulus, and the deflection coefficient. In Comparative Example 4-8, the total amount of the additional alloying elements was too large, resulting in decreasing of the area ratio of Cube orientation, to result in poor in the bending property, the Young's modulus, the deflection coefficient, and the electrical conductivity.

Although it is not shown in Table 1, in each of the sample specimens of Examples according to the present invention and Comparative Examples, the aspect ratio of the grain [a/b] was 0.8 to 2.7; Ra was 0.05 to 0.3 $\mu$m and Rz was 0.3 to 3 $\mu$m, each of which represents the surface roughness; the burr height, which is an index of the pressing property, was 40 $\mu$m or less; and the amount of springback was 10° or less.

The bending property after conducting general Ni plating, Ag plating, or Sn plating, respectively, was also tested and evaluated, and it was confirmed that cracks of the plating were quite lighter in Examples as compared with Comparative Examples.

As shown in Fig. 2, it was confirmed that the accumulation of Cube orientation was high, also in the ODF analysis in Examples according to the present invention. On the other hand, as shown in Fig. 3, it was confirmed that the accumulation of Cube orientation was as low as about 1 in Comparative Examples, which means no accumulation occurred.

Apart from these, in order to clarify the difference between copper alloy sheet materials produced under the conventional production conditions and the copper alloy sheet material according to the present invention, copper alloy sheet materials were produced under the conventional production conditions, and evaluations of the same characteristic items as described above were conducted. The working ratio was adjusted so that, unless otherwise specified, the thickness of the respective sheet material would be the same as the thickness in the Examples described above.

(Comparative Example 101) ... The conditions of Example 1 in JP-A-2009-132965

Using oxygen-free copper as a base material, a copper alloy having a composition containing Cr 0.2 mass% and Zr 0.1 mass% was melted in a high-frequency melting furnace, followed by casting the resultant molten metal to obtain an ingot with thickness 25 mm, width 30 mm, and length 150 mm. The thus-obtained ingot was heated to 950°C, and subjected to hot-rolling to thickness 8 mm, followed by cold-rolling to thickness 1 mm, and annealing at 800°C.

Then, the thus-obtained sheet was subjected to cold working at a working degree of 40% and then to a heat treatment at 500°C for 1 minute, which were repeatedly conducted three times, thereby to prepare a metal sheet material with thickness 0.22 mm.

This was utilized as Sample specimen c01.

The thus-obtained Sample specimen c01 was different from those in the above Examples according to the present invention in the production conditions, in that no intermediate heat treatment 1 [Step 7] was conducted, and that the steps of heat treatments and cold-rollings after the cold-rolling 1 [Step 6] were different from those in the above Examples.

The results were that the Sample specimen c01 had the area ratio of Cube orientation of lower than 5%, and that it did not satisfy the properties required in the present invention on the Young's modulus (the modulus of longitudinal elasticity).

(Comparative Example 102) ··· The conditions of Example 1 in JP-A-2008-297617

A copper alloy having a composition containing Be 1.91 mass%, Ni 0.14 mass%, Fe 0.04 mass%, and Co 0.30 mass%, with the balance being copper, was melted, followed by casting by using a vertical-type semi-continuous casting machine. The thus-obtained ingot (thickness 60 mm) was heated to a temperature (820 to 900°C, depending on the alloy composition) that was lower by 30°C or more than the solidus line, followed by subjecting to extraction, and hot-rolling was started. The solidus temperatures had been figured out in advance by conducting preliminary experiments on the alloys of the respective compositions. In the hot-rolling, the pass schedule was preset so that the rolling ratio in a temperature region of 700°C or more would become 60% or more, and that the rolling would be conducted at a rolling reduction ratio of 44% even in a temperature region of lower than 700°C. The final pass temperature of the hot-rolling was from 600°C to 400°C. The total hot-rolling ratio from the ingot was about 90%. After the hot-rolling, the oxidized layer on the surface layer was removed by mechanical polishing (scalping). The resultant sheet was then subjected to cold-rolling at a rolling ratio of 82%, followed by subjecting to a solution treatment. In the solution treatment, the temperature reached was adjusted within the range of 700 to 850°C depending on the alloy composition so that the average grain size (the twin boundary was not deemed as the grain boundary) after the solution treatment would become 10 to 40 $\mu$m, and the retention time period in the temperature region of 700 to 850°C was adjusted within the range of 10 seconds to 10 minutes. Then, the resultant sheet material after the solution treatment was subjected to finish cold-rolling at a rolling ratio of 20%. If necessary, scalping was conducted in the mid course, to set the sheet thickness to 0.2 mm. For the sample specimen as "a material that has not been subjected to any aging", the sheet material at this stage was utilized.

With respect to the thus-obtained sheet material with sheet thickness 0.2 mm, aging experiments at a temperature range of 300 to 500°C up to 5 hours at the highest were conducted as preliminary experiments, to figure out the aging conditions to give the maximum hardness (the aging temperature therefor is defined as $T_m$ (°C), and the aging time period thereof is defined as $t_m$ (min)) depending on the alloy composition.

The sheet material of this alloy (the material that had not been subjected to any aging) was subjected to aging at an aging temperature $T_m$ (320°C) for an aging time period $t_m$ (120 minutes), to give a sample specimen of "an age-hardened material". This was utilized as Sample specimen c02-1.

Further, on the assumption of a case of shipping as a mill-hardened material, a sheet material of this alloy (the finish cold-rolling ratio was changed to 10%, in the above material that had not been subjected to any aging) was subjected to aging to the extent so that the maximum hardness would not be attained, which was utilized as a sample specimen. The conditions for the aging were in the range of an aging temperature Tm (320°C) and an aging time period of 0.1 $t_m$ or more and lower than $t_m$ (20 minutes). This was utilized as Sample specimen c02-2.

The thus-obtained Sample specimens c02-1 and c02-2 were different from those in the above Examples according to the present invention in the production conditions, in that no intermediate heat treatment 1 [Step 7] was conducted, and that the steps of heat treatments and cold-rollings after the cold-rolling 1 [Step 6] were different from those in the above Examples. The results were that the Sample specimens c02-1 and c02-2 each had the area ratio of Cube orientation of lower than 5%, and that they did not satisfy the properties required in the present invention on the Young's modulus (the modulus of longitudinal elasticity).

(Comparative Example 103) ... The conditions of Example 1 in JP-A-2009-84594

A copper alloy having a composition containing 0.7 mass% of Ni, 1.2 mass% of Sn, 0.05 mass% of P, 0.02 mass% of Fe, and 0.05 mass of Zn, with the balance being copper, was melted in a coreless furnace, followed by casting by a semi-continuous casting method (the cooling solidification speed for the casting 2°C/sec), to give an ingot with thickness 70 mm × width 200 mm × length 500 mm. This ingot was rolled under the following conditions to thereby produce a copper alloy thin sheet. The surface of the ingot was face-milled, followed by subjecting the resultant ingot to heating, then heating in a heating furnace at 960°C, immediately subjecting to hot-rolling at a hot-rolling finish temperature of 750°C to give a sheet with thickness 16 mm, and quenching in water from a temperature of 650°C or more. At that time, the time period required from the completion of adding the alloying elements in the melting furnace to the start of casting was set to 1,200 seconds or less, and the time period required from the extraction from the heating furnace to the finish of hot-rolling was set to 1,200 seconds or less.

This sheet was subjected to removal of oxide scale, and subjected to: cold-rolling → continuous finish-annealing → cold-rolling → strain-relief annealing, to produce a copper alloy thin sheet. Specifically, the sheet after the primary cold-rolling (rough cold-rolling, intermediate cold-rolling) was subjected to face milling. This sheet was subjected to the finish annealing, in an annealing furnace, at the highest reached temperature of 600°C as the substantial temperature of the sheet, for a retention time period at this temperature of 60 seconds.

After this finish annealing, the resultant sheet was subjected to the final cold-rolling at a rolling reduction ratio of 60%. This final cold-rolling was conducted with rolls of a roll diameter (60 mm) and the minimum rolling reduction ratio per pass (30%). In the final cold-rolling, rolls having the same roll diameter were utilized for four passes. Further, the roll length was 500 mm. After this final cold-rolling, the resultant sheet was subjected to the low-temperature strain-relief annealing at substantial temperature 400°C for 20 seconds, thereby to give a copper alloy thin sheet with thickness 0.25 mm.

This was utilized as Sample specimen c03.

The thus-obtained Sample specimen c03 was different from those in the above Examples according to the present invention in the alloy composition, in that the Sample specimen c03 contained 0.02 mass% of Fe, and in the production conditions, in that no intermediate heat treatment 1 [Step 7] was conducted before the finish annealing, which is a recrystallization heat treatment that corresponds to Step 9 in the present invention, and that the steps of heat treatments and cold-rollings after the cold-rolling 1 [Step 6] were different from those in the above Examples. The results were that the Sample specimen c03 had the area ratio of Cube orientation of lower than 5%, and that it did not satisfy the properties required in the present invention on the Young's modulus (the modulus of longitudinal elasticity).

(Comparative Example 104) ... The conditions of Example 1 in JP-A-2009-228013

A copper alloy containing 0.66 mass% of Mg and 0.04 mass% of P, with the balance being Cu, was melted, followed by casting by using a vertical-type small-size continuous casting machine, to give an ingot with thickness 50 mm. The thus-obtained ingot was heated to 900°C, followed by subjecting to extraction, and hot-rolling was started. In the hot-rolling, the pass schedule was preset so that the rolling ratio in a temperature region of 900°C to 600°C would become 60% or more, and that the rolling would be conducted even in a temperature region of lower than 600°C. The hot-rolling ratio in a temperature region of lower than 600°C but not lower that 300°C was set to 48%, and the final pass temperature of the hot-rolling was from 500°C to 300°C. The total hot-rolling ratio from the ingot was about 90%. After the hot-rolling, the oxidized layer on the surface layer was removed by mechanical polishing (scalping).

The resultant sheet was then subjected to cold-rolling at a rolling ratio of 92%, followed by subjecting to recrystallization annealing at 400 to 700°C. The temperature change in the recrystallization annealing was monitored, with a thermocouple attached to the surface of the sample. In the recrystallization annealing, the temperature reached was adjusted within the range of 400 to 700°C depending on the alloy composition so that the average grain size (the twin boundary was not deemed as the grain boundary) after the recrystallization annealing would become 10 to 30 μm, and the retention time period in the temperature region of 400 to 700°C was adjusted within the range of 10 seconds to 30 minutes.

Then, the resultant sheet material after the recrystallization annealing was subjected to finish cold-rolling at a rolling ratio of 35%, followed by low-temperature annealing in which the resultant sheet material was placed in a furnace at 300°C for 5 minutes.

In the above manner, a copper alloy sheet material was obtained. If necessary, scalping was conducted in the mid course, to set the sheet thickness of the copper alloy sheet material to 0.3 mm. This was utilized as Sample specimen c04.

The thus-obtained Sample specimen c04 was different from those in the above Examples according to the present invention in the production conditions, in that no intermediate heat treatment 1 [Step 7] was conducted, and that the steps of heat treatments and cold-rollings after the cold-rolling 1 [Step 6] were different from those in the above Examples. The results were that the Sample specimen c04 had the area ratio of Cube orientation of lower than 5%, and that it did not satisfy the properties required in the present invention on the Young's modulus (the modulus of longitudinal elasticity).

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2010-191534 filed in Japan on August 27, 2010, which is entirely herein incorporated by reference.

REFERENCE SIGNS LIST

    1 Test specimen with an initial stress applied thereon
    2 Test specimen after removing the load
    3 Test specimen without any stress applied thereon
    4 Test bench

**Claims**

1. A copper alloy sheet material, containing at least one of Cr, Zr, and Ti in an amount of 0.05 to 1.0 mass% in total, with the balance being copper and unavoidable impurities,
   wherein an area ratio of Cube orientation {0 0 1} <1 0 0> is 5% or more and 70% or less, in crystal orientation analysis by an EBSD analysis, and
   wherein a Vickers hardness is 120 or more.

2. A copper alloy sheet material, containing at least one of Cr, Zr, and Ti in an amount of 0.05 to 1.0 mass% in total, and at least one selected from the group consisting of Sn, Zn, Si, Ag, Mn, B, P, Mg, Ni, Co, and Hf in an amount of 0.005 to 1.0 mass% in total, with the balance being copper and unavoidable impurities,
   wherein an area ratio of Cube orientation {0 0 1} <1 0 0> is 5% or more and 70% or less, in crystal orientation analysis by an EBSD analysis, and
   wherein a Vickers hardness is 120 or more.

3. A copper alloy sheet material, containing at least one of Be and Ni in an amount of 0.1 to 3.0 mass% in total, with the balance being copper and unavoidable impurities,
   wherein an area ratio of Cube orientation {0 0 1} <1 0 0> is 5% or more and 70% or less, in crystal orientation analysis by an EBSD analysis, and
   wherein a Vickers hardness is 120 or more.

4. A copper alloy sheet material, containing at least one of Be and Ni in an amount of 0.1 to 3.0 mass% in total, and at least one selected from the group consisting of Sn, Zn, Ag, Mn, B, P, Mg, Al, Cr, Co, Ti, Zr, and Hf in an amount of 0.005 to 1.0 mass% in total, with the balance being copper and unavoidable impurities,
   wherein an area ratio of Cube orientation {0 0 1} <1 0 0> is 5% or more and 70% or less, in crystal orientation analysis by an EBSD analysis, and
   wherein a Vickers hardness is 120 or more.

5. A copper alloy sheet material, containing at least one of Ni and Sn in an amount of 0.03 to 5.0 mass% in total, and P in an amount of 0.01 to 0.3 mass%, with the balance being copper and unavoidable impurities,
wherein an area ratio of Cube orientation {0 0 1} <1 0 0> is 5% or more and 70% or less, in crystal orientation analysis by an EBSD analysis, and
wherein a Vickers hardness is 120 or more.

6. A copper alloy sheet material, containing at least one of Ni and Sn in an amount of 0.03 to 5.0 mass% in total, P in an amount of 0.01 to 0.3 mass%, and at least one selected from the group consisting of Zn, Si, Ag, Mn, B, Mg, Cr, Co, Ti, Zr, and Hf in an amount of 0.005 to 1.0 mass% in total, with the balance being copper and unavoidable impurities,
wherein an area ratio of Cube orientation {0 0 1} <1 0 0> is 5% or more and 70% or less, in crystal orientation analysis by an EBSD analysis, and
wherein a Vickers hardness is 120 or more.

7. A copper alloy sheet material, containing Mg and P in an amount of 0.3 to 2.0 mass% in total, with the balance being copper and unavoidable impurities,
wherein an area ratio of Cube orientation {0 0 1} <1 0 0> is 5% or more and 70% or less, in crystal orientation analysis by an EBSD analysis, and
wherein a Vickers hardness is 120 or more.

8. A copper alloy sheet material, containing Mg and P in an amount of 0.3 to 2.0 mass% in total, and at least one selected from the group consisting of Sn, Zn, Ag, Mn, B, Ni, Co, Cr, Ti, Zr, and Hf in an amount of 0.005 to 1.0 mass% in total, with the balance being copper and unavoidable impurities,
wherein an area ratio of Cube orientation {0 0 1} <1 0 0> is 5% or more and 70% or less, in crystal orientation analysis by an EBSD analysis, and
wherein a Vickers hardness is 120 or more.

9. The copper alloy sheet material according to any one of Claims 1 to 8, wherein the total of area ratios of Copper orientation {1 2 1} <1 1 1> and Brass orientation {1 1 0} <1 1 2> is 20% or less.

10. The copper alloy sheet material according to any one of Claims 1 to 9, wherein second phase particles with a size of 30 to 1,000 nm are present at $10^4$ to $10^8$ per $mm^2$.

11. A method of producing the copper alloy sheet material according to any one of Claims 1 to 10, comprising: subjecting a copper alloy raw material having an alloy composition to give the copper alloy sheet material, to the steps of:

casting [Step 1]; homogenization heat treatment [Step 2]; hot-working [Step 3]; water-cooling [Step 4]; cold-rolling 1 [Step 6]; heat treatment 1 [Step 7]; cold-rolling 2 [Step 8]; and heat treatment 2 [Step 9], in this order.

12. The method of producing the copper alloy sheet material according to Claim 11, wherein aging precipitation heat treatment [Step 11]; cold-rolling [Step 12]; and temper annealing [Step 13] are conducted in this order, after the heat treatment 2 [Step 9].

13. A copper alloy part, comprising the copper alloy sheet material according to any one of Claims 1 to 10.

14. A connector, comprising the copper alloy sheet material according to any one of Claims 1 to 10.

Fig. 1

| | | Angle of rotation (deviation angle) from (100) [001] | | |
| | | 0° | 5° | 10° |
| | (1 0 0) [Ex1] | (0 0 1) [1 0 0] Just Cube | (0 2 23) [1 0 0] | (0 13 17) [1 0 0] |
| Axis of rotation | (1 1 0) [Ex2] | (0 0 1) [1 0 0] Just Cube | (-1 1 16) [16 0 1] | (-1 1 8) [8 0 1] |
| | (1 1 1) [Ex3] | (0 0 1) [1 0 0] Just Cube | (-1 1 19) [18 -1 1] | (-1 1 10) [9 -1 1] |

X axis:
Rolling direction (RD)
of material

Y axis: Transverse direction (TD) of material

Z axis: Normal direction (ND) of material

Note: "Just Cube" means the just cube orientation.

Fig. 2

Fig. 3

max = 12.789
8.363
5.469
3.576
2.339
1.529
1.000
0.654

0°    5°    10°    15°    20°

25°    30°    35°    40°    45°

50°    55°    60°    65°    70°

75°    80°    85°    90°

Constant Angle: φ2

φ1 (0.0°-90.0°)

Φ (0.0°-90.0°)

Fig. 4

(a)

(b)

| | INTERNATIONAL SEARCH REPORT | International application No. |
|---|---|---|
| | | PCT/JP2011/069466 |

A. CLASSIFICATION OF SUBJECT MATTER
*C22C9/00*(2006.01)i, *C22C9/01*(2006.01)i, *C22C9/02*(2006.01)i, *C22C9/04*
(2006.01)i, *C22C9/05*(2006.01)i, *C22C9/06*(2006.01)i, *C22C9/10*(2006.01)i,
*C22F1/08*(2006.01)i, *H01B1/02*(2006.01)i, *C22F1/00*(2006.01)n
According to International Patent Classification (IPC) or to both national classification and IPC

B. FIELDS SEARCHED

Minimum documentation searched (classification system followed by classification symbols)
C22C9/00-9/10, C22F1/08, H01B1/02, C22F1/00

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-283059 A  (Kobe Steel, Ltd.),<br>19 October 2006 (19.10.2006),<br>entire text; all drawings<br>(Family: none) | 1-14 |
| A | JP 2009-132965 A  (Hitachi Cable, Ltd.),<br>18 June 2009 (18.06.2009),<br>entire text; all drawings<br>(Family: none) | 1,2,9-14 |
| A | JP 2005-281850 A  (Sumitomo Metal Industries,<br>Ltd.),<br>13 October 2005 (13.10.2005),<br>entire text; all drawings<br>& US 2006/0239853 A1      & EP 1681360 A1<br>& WO 2005/028689 A1      & CA 2538947 A1<br>& KR 10-0766639 B1       & CN 1856588 A | 1,2,9-14 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>11 November, 2011 (11.11.11) | Date of mailing of the international search report<br>22 November, 2011 (22.11.11) |
|---|---|
| Name and mailing address of the ISA/<br>Japanese Patent Office | Authorized officer |
| Facsimile No. | Telephone No. |

Form PCT/ISA/210 (second sheet) (July 2009)

EP 2 610 359 A1

**INTERNATIONAL SEARCH REPORT**

International application No.

PCT/JP2011/069466

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-297617 A (Dowa Metaltech Co., Ltd.), 11 December 2008 (11.12.2008), entire text; all drawings (Family: none) | 3,4,9-14 |
| A | JP 2009-41056 A (Kobe Steel, Ltd.), 26 February 2009 (26.02.2009), entire text; all drawings & EP 2184371 A1 & WO 2009/019990 A1 | 5,6,9-14 |
| A | JP 2009-228013 A (Dowa Metaltech Co., Ltd.), 08 October 2009 (08.10.2009), entire text; all drawings (Family: none) | 7-14 |

Form PCT/ISA/210 (continuation of second sheet) (July 2009)

41

## INTERNATIONAL SEARCH REPORT

| International application No. |
| --- |
| PCT/JP2011/069466 |

| **Box No. II** | **Observations where certain claims were found unsearchable (Continuation of item 2 of first sheet)** |
| --- | --- |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| **Box No. III** | **Observations where unity of invention is lacking (Continuation of item 3 of first sheet)** |
| --- | --- |

This International Searching Authority found multiple inventions in this international application, as follows:
    The invention of claim 1, the invention of claim 3, the invention of claim 5 and the invention of claim 7 are different from one another in the type of alloy, and thus they do not have a same or corresponding special technical feature.
    Consequently, the claims of this international application contain the following four (groups of) inventions.
    (Continued to extra sheet)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

| **INTERNATIONAL SEARCH REPORT** | International application No. |
|---|---|
| | PCT/JP2011/069466 |

Continuation of Box No.III of continuation of first sheet(2)

(Invention group 1) the inventions of claims 1 and 2, and parts of the inventions of claims 9-14 dependent on claim 1 or 2
: inventions related to Cu-(Cr, Zr, Ti) alloy
(Invention group 2) the inventions of claims 3 and 4, and parts of the inventions of claims 9-14 dependent on claim 3 or 4
: inventions related to Cu-(Be, Ni) alloy
(Invention group 3) the inventions of claims 5 and 6, and parts of the inventions of claims 9-14 dependent on claim 5 or 6
: inventions related to Cu-(Ni, Sn)-P alloy
(Invention group 4) the inventions of claims 7 and 8, and parts of the inventions of claims 9-14 dependent on claim 7 or 8
: inventions related to Cu-Mg-P alloy

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006009137 A
- JP 2008013836 A
- JP 2006283059 A
- JP 2005225063 A
- JP 2009242846 A
- JP 2001294957 A
- JP 2003306732 A
- JP 2010191534 A